# EUROPEAN PATENT APPLICATION

(11) **EP 2 818 372 A1**
(43) Date of publication of application: **31.12.2014**
(21) Application number: 13752138.1
(22) Date of filing: 29.01.2013
(51) Int. Cl.: B60T 7/12, B60T 8/1761, B60T 17/22

(54) **PARKING LOCK DEVICE FOR VEHICLE**

(30) Priority: 20.02.2012 JP 2012033582
(71) Applicant: Nissan Motor Company, Limited, Kanagawa-ku Yokohama-shi Kanagawa 221-0023 (JP)
(72) Inventor: SENOO, Takashi, Atsugi-shi Kanagawa 243-0123 (JP)
(74) Representative: Hoefer & Partner
(86) International application number: PCT/JP2013/051885
(87) International publication number: WO 2013/125304

(57) **Abstract**

In this parking lock device for a vehicle, when there is a request to active left and right parking lock mechanisms (41C, 41D) which are of the mesh type and which separately lock respective left and right rear wheels (RL, RR), a hydraulic brake unit (3) that brakes left and right front wheels (FL, FR) to which the left and right parking lock mechanisms (41C, 41D) are not set is activated. Thus, the vehicle can be park-locked stably without inhibiting the wheel-locking operation by the left and right parking lock mechanisms (41C, 41D).

## Description

### Technical Field

This invention relates to a parking lock device for a vehicle which is provided with left and right parking lock means of an engagement type which fix left and right wheels independently.

### Background Art

Conventionally, there is known a parking lock device for a vehicle which is configured to suppress an unintended behavior of the vehicle due to a deviation of left and right parking lock timings in a case where a pair of left and right wheels are provided with left and right parking lock means of an engagement type that are configured to independently fix the pair of the left and right wheels (for example, cf. a patent document 1). In this parking lock device for the vehicle, the left and right wheels provided with the left and right parking lock means are braked based on a hydraulic pressure brake in accordance with parking lock states of the left and right parking lock means.

However, in a conventional parking lock device, the left and right wheels (hereinafter, referred to as parking lock wheels) provided with the left and right parking lock means are braked by the hydraulic pressure brake. Accordingly, the rotations of the parking lock wheels may be stopped during the parking lock operation. That is, the fixation operations of the wheels by the left and right parking lock means are inhibited, so that there is a problem that the vehicle is stopped in a state in which the parking lock wheels are not fixed by the left and right parking lock means.

Moreover, when the vehicle is stopped in a state in which one of the left and right wheels has not complete the parking lock, the one of the left and right wheels which is not park-locked may be moved. Accordingly, the one side skid (skid on the one side) and the rearward movement of the vehicle may be generated on the low µ road and the uphill road.

It is, therefore, an object of the present invention to provide a parking lock device for a vehicle which is devised to dissolve the above-mentioned problems, and to perform a stable parking lock of the vehicle without inhibiting the fixation operation of the wheels by the left and right parking lock means.

### Prior Art Document

### Patent Document

Patent Document 1: Japanese Patent Application Publication No. 2006-44458

### Summary of The Invention

For attaining the above-described object, the parking lock device according to the present invention includes first left and right wheels, left and right parking lock means, a parking lock operation request means, second left and right wheels, a control brake means, and a parking control means. The left and right parking lock means are parking lock means of an engagement type which is configured to independently fix the first left and right wheels. The parking lock operation request means is configured to request an operation of the left and right parking lock means. Moreover, the second left and right wheels are wheels to which the left and right parking lock means are not provided. The control brake means is a brake means configured to brake the second left and right wheels. The parking control means is configured to actuate the control brake means when the operation request of the left and right parking lock means is generated.

In the parking lock device for the vehicle according to the present invention, the control brake means is actuated by the parking control means when the operation request of the left and right parking lock means is generated. With this, the second left and right wheels to which the left and right parking lock means are not provided are braked. That is, when the first left and right wheels are independently fixed, the left and right lock timings may be deviated in accordance with the rotation states of the first left and right wheels to which the left and right parking lock means are provided, since the left and right parking lock means are the engagement type. On the other hand, the second left and right wheels to which the left and right parking lock means are not provided are controlled by the control brake means so as to act the braking force to the vehicle. It is possible to suppress the unintended vehicle behavior due to the difference of the left and right braking forces of the vehicle.

Moreover, the control brake means is configured to brake the second left and right wheels to which the left and right parking lock means are not provided. Accordingly, the rotations of the first left and right wheels are not restricted. Consequently, the wheel fixing operation by the left and right parking lock means configured to fix this first left and right wheels are not inhibited. It is possible to prevent the vehicle from stopping in a state in which the parking locks of the first left and right wheels have not been completed. Consequently, it is possible to perform the stable parking lock of the vehicle.

### Brief Description of Drawings

FIG. 1 is an overall system view showing an in-wheel motor vehicle to which a parking lock device according to a first embodiment is applied.
FIG. 2 is a flowchart showing a flow of a parking operation performed in the in-wheel motor vehicle to which the parking lock device according to the first embodiment is applied.
FIG. 3 is a time chart showing characteristics of a parking lock request, a parking actuator operation command, a hydraulic pressure operation command, and a vehicle speed when a vehicle speed at an output of a parking lock operation request is equal to or smaller than a parking lock operation possible vehicle speed, in the in-wheel motor vehicle to which the parking lock device according to the first embodiment is applied.
FIG. 4 is a time chart showing characteristics such as a parking lock operation request, a parking actuator operation command, a hydraulic pressure brake operation command, and a vehicle speed when the vehicle speed at the output of the parking lock operation request is greater than the parking lock operation possible vehicle speed, in the in-wheel motor vehicle to which the parking lock device according to the first embodiment is applied.
FIG. 5 is an overall system view showing an in-wheel motor vehicle to which a parking lock device according to a second embodiment is applied.
FIG. 6 is a flowchart showing a flow of a parking lock operation performed in the in-wheel motor vehicle to which the parking lock device according to the second embodiment is applied.
FIG. 7 is a flowchart showing a flow of a hydraulic pressure brake operation performed in the in-wheel motor vehicle to which the parking lock device according to the second embodiment is applied.
FIG. 8 is a view showing one example of a correction value setting map of the hydraulic pressure braking force.
FIG. 9 is a view showing one example of a braking force setting table.
FIG. 10 is a block diagram showing a setting process of the hydraulic pressure braking force.
FIG. 11 is a time chart showing characteristics of a parking lock operation request, a parking actuator operation command, a hydraulic pressure braking force, FR and FL wheel rotation speeds, an RR wheel rotation speed, an RL wheel rotation speed, and a steering angle at the output of the parking lock operation request in the in-wheel motor vehicle to which the parking lock device according to the second embodiment is applied.
FIG. 12 is an overall system view showing an in-wheel motor vehicle to which a parking lock device according to a third embodiment is applied.
FIG. 13 is a flowchart showing a flow of a parking operation performed in the in-wheel motor vehicle to which the parking lock device according to the third embodiment is applied.
FIG. 14 is a flowchart showing a flow of a parking lock release operation performed in an in-wheel motor vehicle to which a parking lock device according to a fourth embodiment is applied.

### Description of Embodiments

Hereinafter, embodiments of a parking lock device for a vehicle according to the present invention are illustrated based on a first embodiment to a fourth embodiment.

### First Embodiment

### First, a structure is illustrated.

A structure of a parking lock device of an in-wheel motor vehicle (one example of a vehicle) is illustrated with reference to "an overall system configuration", and "a parking control configuration".

### [Overall System Configuration]

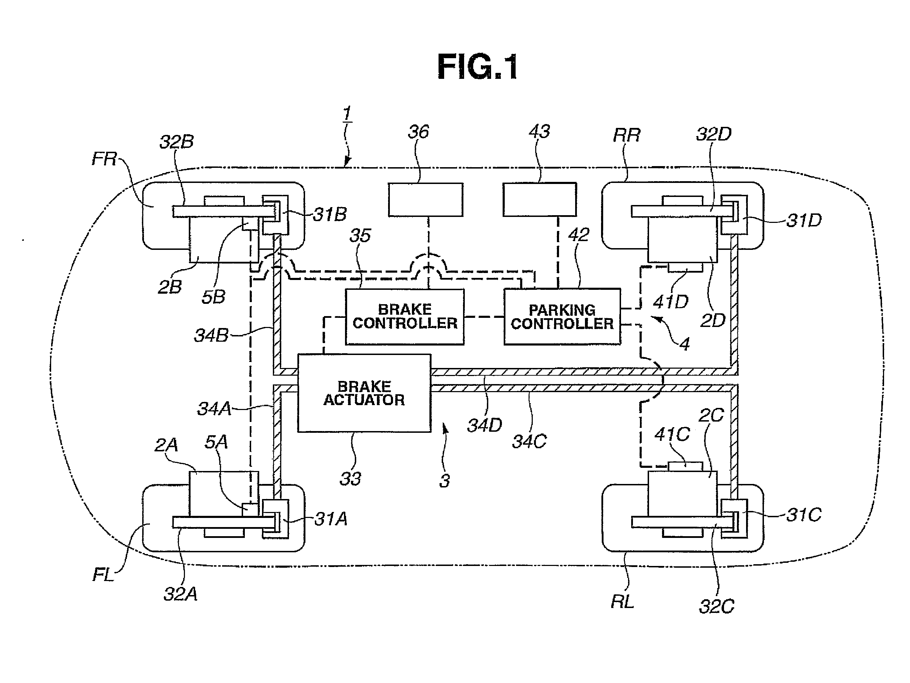

FIG. 1 is an overall system configuration showing an in-wheel motor vehicle to which the parking lock device according to the first embodiment is applied. Hereinafter, the overall system configuration of the in-wheel motor vehicle is illustrated with reference to FIG. 1.

As shown in FIG. 1, the in-wheel motor vehicle 1 includes left and right front wheels (second left and right wheels) FL and FR; left and right rear wheels (first left and right wheels) RL and RR, motor/generators 2A-2D mounted, respectively, in the wheels FL and FR, and RL and RR; a hydraulic pressure braking unit (control brake means) 3; a parking lock unit 4; and left and right front wheel rotation sensors (vehicle speed sensing means) 5A and 5B.

The motor/generators 2A-2D can be three-phase synchronous motors, and three-phase induction motors, respectively. The motor/generators 2A-2D are alternating current motors which perform a power running at an acceleration, and a regeneration at a deceleration. At the power running, the motor/generators 2A-2D independently drive the wheels FL, FR, RL, and RR by the current from a battery (not shown) (nickel hydride battery or lithium-ion battery). Moreover, at the regeneration, the motor/generators 2A-2D independently rotate the wheels FL, FR, RL, and RR in directions opposite to the directions at the drive so as to charge the battery. At this time, the regenerative brakings are acted to the wheels FL, FR, RL, and RR. Besides, "independently driving" or "independently rotating in the reverse direction" means that the different driving torques (the different regenerative torques) can be generated in the wheels FL, FR, RL, and RR.

The hydraulic pressure braking unit 3 includes brake calipers 31A-31D provided, respectively, to wheels FL, FR, RL, and RR; brake discs 32A-32D fixed, respectively, to hubs of the wheels FL, FR, RL, and RR; a brake actuator 33; brake fluid pipings 34A-34D connecting the brake calipers 31A-31D and brake actuator 33; a brake controller 35; and a brake pedal 36. Besides, the brake actuator 33 includes a pump which increases the brake fluid pressure (the brake hydraulic pressure); a plurality of valves arranged to vary the brake fluid pipings 34A-34D to which the brake fluid pressure is transmitted, and to transmit the pressurized brake fluid pressure (the high brake fluid pressure) to the desired vehicle wheels; master cylinders and so on.

This hydraulic pressure braking unit 3 performs a normal braking control and a control brake control to brake the wheels FL, FR, RL, and RR independently. In this case, "the normal braking control" is to transmit the brake fluid pressure generated by the depression of the brake pedal 36 by the driver to the brake calipers 31A-31D, and to brake the wheels FL, FR, RL, and RR independently. On the other hand, "the control brake control" is to transmit the brake fluid pressure set by the brake actuator 33 by a hydraulic brake actuation command outputted from the brake controller 35, and to brake the wheels FL, FR, RL, and RR independently. That is, the brake actuator 33 corresponds to a left and right braking means to brake the left and right front wheels FL and FR independently.

The brake controller 35 receives a depression signal from the brake pedal 36, a parking lock actuation request from a parking controller 42 described later, a vehicle speed signal, and so on.

The parking lock unit 4 includes left and right parking lock mechanisms 41C and 41D provided, respectively, to the left and right rear wheels RL and RR; the parking controller 42; and a parking operation switch 43. Besides, (neither of) the left and right front wheels FL and FR have no parking lock mechanism. The left and right rear wheels RL and RR are parking lock wheels fixed by the left and right parking lock mechanisms 41C and 41D.

The left and right parking lock mechanisms 41C and 41D have the same structure, respectively. Each of the left and right parking lock mechanisms 41C and 41D includes a parking gear and a parking pawl (not shown). Each of the parking gears is connected to a driving system between one of the left and right rear wheels RL and RR and one of the motor/generators 2C and 2D. The parking gear is a gear rotating as a unit with the wheel. The parking pawl is pivoted by a parking actuator operation command outputted from the parking controller 42. The parking pawls are engaged with the parking gears to fix the left and right rear wheels RL and RR, respectively. That is, these left and right parking lock mechanisms 41C and 41D correspond to left and right parking lock means of the engagement type which are arranged to fix the left and right wheels RL and RR independently.

In this case, a timing at which the parking pawl and the parking gear is engaged is determined by the rotation state of the parking gear and the position of the gear teeth. Accordingly, a time period from a timing at which the parking pawl is started to be pivoted, to a timing at which the parking pawl is engaged with the parking pawl (the parking gear) may be different between the left and right rear wheels RL and RR. That is, a timing of the completion of the parking lock of the left parking lock mechanism 41C may be deviated from a timing of the completion of the parking lock of the right parking lock mechanism 41D. Moreover, the parking pawls engaged with the parking gears are pivoted, respectively, to the outside disengagement position from the gears for releasing the parking locks by the left and right parking lock mechanisms 41C and 41D.

The parking controller 42 outputs the actuator operation command to the left and right parking lock mechanisms 41C and 41D in accordance with the parking lock operation request or the parking lock release request which is inputted from the parking operation switch 43. Moreover, this parking controller 42 receives the rotation speed signals from the left and right front wheel rotation sensors 5A and 5B. This parking controller 42 calculates the vehicle speed from the average of the rotation speeds of the left and right front wheels FL and FR.

This parking operation switch 43 is a switch operated by the driver in an ON/OFF manner. When the parking operation switch 43 is operated to the ON state, the parking operation switch 43 requests the operation of the left and right parking lock mechanisms 41C and 41D (the operations of the left and right parking lock mechanisms 41C and 41D are requested). When the parking operation switch 43 is operated to the OFF state, the parking operation switch 43 requests the releases of the left and right parking lock mechanisms 41C and 41D. That is, this parking operation switch 43 corresponds to a parking lock operation request means and a parking lock release request means.

The left and right front wheel rotation sensors 5A and 5B are provided, respectively, to the left and right front wheels FL and FR. The left and right front wheel rotation sensors 5A and 5B sense the rotation speeds of the left and right front wheels FL and FR independently. Besides, the vehicle speed is calculated based on the signals of the rotation speeds of these left and right front wheel rotation sensors 5A and 5B. These left and right front wheel rotation sensors 5A and 5B correspond to vehicle speed sensing means.

### [Parking Control Structure]

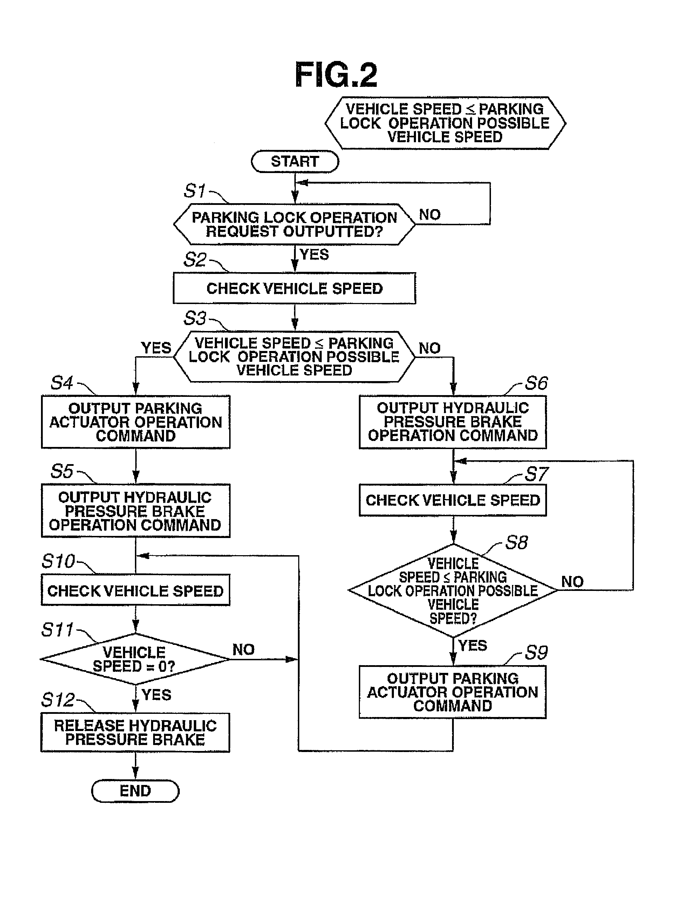

FIG. 2 is a flowchart (a parking control means) showing a flow of the parking operation performed in the in-wheel motor vehicle to which the parking lock device according to the first embodiment is applied. Hereinafter, steps of FIG. 2 representing a parking control configuration are illustrated.

At step S1, it is judged whether or not there is the output of the operation request of the parking lock. In case of YES (there is the request), the process proceeds to step S2. In case of NO (there is no request), the step S1 is repeated. The judgment of whether or not there is the parking lock operation request is performed by the ON/OFF operation of the parking operation switch 43. That is, when this parking operation switch 43 is operated to the ON state, it is judged that the parking operation request is outputted.

Subsequently to the judgment that there is the parking lock operation request at step S1, at step S2, the vehicle speed is checked, and the process proceeds to step S3. In this case, the vehicle speed is the average vehicle wheel speeds of the left and right front wheels FL and FR which are sensed by the left and right front wheel rotation sensors 5A and 5B.

At step S3, it is judged whether or not the vehicle speed checked at step S2 is equal to or smaller than a predetermined setting speed, that is, a parking lock operation possible vehicle speed. In case of YES (the vehicle speed ≤ the parking lock operation possible vehicle speed), the process proceeds to step S4. In case of NO (the vehicle speed > the parking lock operation possible vehicle speed), the process proceeds to step S6. In this case, "parking lock operation possible vehicle speed" is a speed at which the parking pawl can be engaged with the parking gear in an appropriate state in the left and right parking lock mechanisms 41C and 41D. Besides, when the vehicle speed is high, the speed of the rotation of the parking gear is too high. When the parking pawl is started to be pivoted, the parking gear and the parking pawl are hit at the high speed. The impact are provided, respectively, to the parking gear and the parking pawl. Accordingly, the parking lock operation possible vehicle speed is a speed at which the parking gear and the parking pawl do not give the impact to each other even when the parking gear and the parking pawl are abutted at the pivot movement of the parking pawl.

Subsequently to the judgment of the vehicle speed ≤ the parking lock operation possible vehicle speed at step S3, at step S4, the parking actuator operation command is outputted, the process proceeds to step S5. By this output of the parking actuator operation command, the parking pawls are rotated, respectively, in the left and right parking lock mechanisms 41C and 41D. That is, the parking lock control is performed.

Subsequently to the output of the parking actuator operation command at step S4, at step S5, the hydraulic pressure brake operation command is outputted. The process proceeds to step S10. By this output of the hydraulic pressure brake operation command, the control brake control by the hydraulic pressure brake unit 3 is performed with respect only to the left and right front wheels FL and FR to which the left and right parking lock mechanisms 41C and 41D are not set. That is, "the output of the hydraulic pressure brake operation command" at this step S5 is that the command to transmit the predetermined brake hydraulic pressure set by the brake actuator 33 is outputted, respectively, to the brake caliper 31A set in the left front wheel FL and the brake caliper 31B set in the right front wheel FR. Besides, the braking forces by the hydraulic pressure brakes acted to the left and right front wheels FL and FR are identical to each other. The predetermined braking force (basic braking force) is acted.

Subsequently to the judgment of the vehicle speed > the parking lock operation possible vehicle speed at step S3, at step S6, the hydraulic pressure braking operation command is outputted. The process proceeds to step S7. By this output of the hydraulic pressure braking operation command, the control brake control by the hydraulic pressure brake unit 3 is performed with respect only to the left and right front wheels FL and FR to which the left and right parking lock mechanisms 41C and 41D are not set. That is, this "the output of the hydraulic pressure brake operation command" at step S6 is that the brake hydraulic pressure set by the brake actuator 33 are outputted, respectively, to the brake caliper 31A set to the left front wheel FL and the brake caliper 31B set to the right front wheel FR. Besides, the braking forces by the hydraulic pressure brakes which are acted to the front left and right wheels FL and FR are the same. The predetermined braking force (the basic braking force) is acted.

Subsequently to the output of the hydraulic pressure brake operation command at step S6, at step S7, the vehicle speed is checked, the process proceeds to step S8.

At step S8, it is judged whether or not the vehicle speed checked at step S7 is equal to or smaller than the predetermined setting speed, that is, the parking lock operation possible vehicle speed. In case of YES (the vehicle speed ≤ the parking lock operation possible vehicle speed), the process proceeds to step S9. In case of NO (the vehicle speed > the parking lock operation possible vehicle speed), the process returns to step S7.

Subsequently to the judgment of the vehicle speed ≤ the parking lock operation possible vehicle speed at step S8, at step S9, the parking actuator operation command is outputted, the process proceeds to step S10. By this output of the parking actuator operation command, the parking pawls are pivoted, respectively, in the left and right parking lock mechanisms 41C and 41D.

Subsequently to the output of the hydraulic pressure brake operation command at step S5 or the output of the parking actuator operation command at step S9, at step S10, the vehicle speed is checked, the process proceeds to step S11.

At step S11, it is judged whether or not the vehicle speed checked at step S7 is zero. In case of YES (the vehicle speed = zero), the process proceeds to step S12. In case of NO (the vehicle speed > zero), the process returns to step S10. In this case, "the vehicle speed is zero" represents a vehicle stop state, that is, a state in which the rotations of the left and right front wheels FL and FR which are wheels to which the left and right parking lock mechanisms 41C and 41D are not set are stopped.

Subsequently to the judgment of the vehicle speed = zero at step S11, at step S12, the hydraulic brake is released, and the process proceeds to an end. In this case, "the release of the hydraulic pressure brake" is to release the brake hydraulic pressures transmitted, respectively, to the brake caliper 31A set to the left front wheel FL, and the brake caliper 31B set to the right front wheel FR.

Next, the parking control operation of the parking lock mechanism of the vehicle according to the first embodiment are illustrated in case of "the low vehicle speed state" and "the high vehicle speed state".

### [Low Vehicle State]

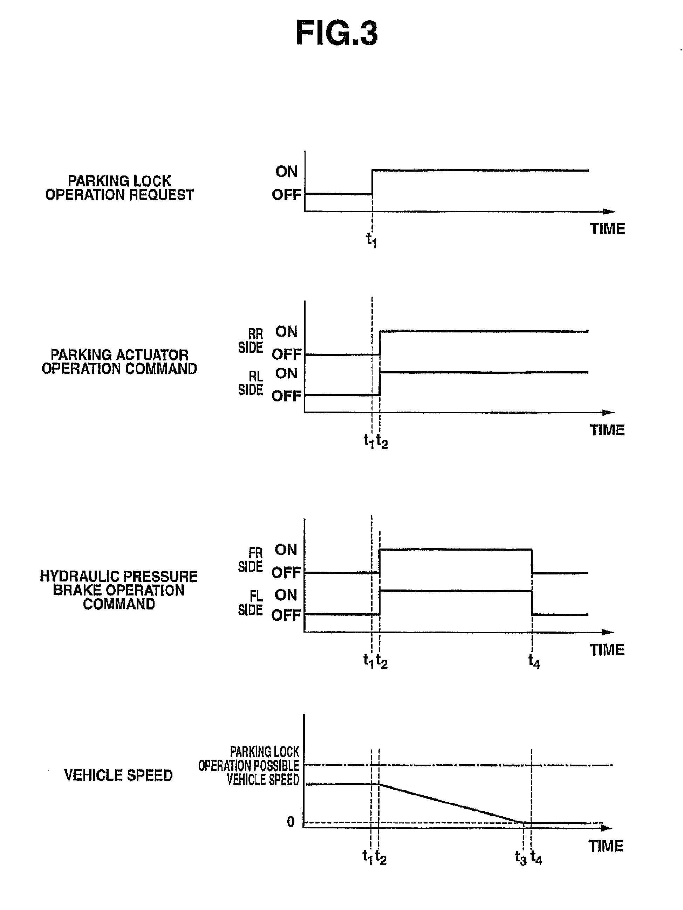

FIG. 3 is a time chart showing characteristics of the parking lock operation request, the parking actuator operation command, the hydraulic pressure braking operation command, and the vehicle speed in a case in which the vehicle speed at the output of the parking lock operation request is equal to or smaller than the parking lock operation possible vehicle speed in the in-wheel motor vehicle to which the parking lock device according to the first embodiment is applied.

In the in-wheel motor vehicle to which the parking lock device according to the first embodiment is applied, when the parking operation switch 43 is operated to the ON state at a time t1 shown in FIG. 3, the parking lock operation request is switched to the ON state.

With this, in the flowchart shown in FIG. 2, the process proceeds along the step S1→step S2→step S3. The vehicle speed state is judged.

At time t2, when the vehicle speed is equal to or smaller than the parking lock operation possible vehicle speed, the process proceeds along step S4→step S5. The parking actuator operation command and the hydraulic pressure braking operation command are outputted. With this, the parking lock control is performed with respect to the left and right rear wheels RL and RR by the parking lock unit 4. Moreover, the control braking control is performed with respect to the left and right front wheels FL and FR by the hydraulic pressure brake unit 3. Besides, by performing the control brake control, the braking force is acted to the left and right front wheels FL and FR. Accordingly, the vehicle speed is gradually decreased after time t2.

Then, the process proceeds along step S10→step S11. At time t3, when the vehicle speed becomes zero, the process proceeds to step S12 at time t4. The control brake control with respect to the left and right front wheels FL and FR by the hydraulic pressure brake unit 3 is released.

In this way, in the parking lock device according to the first embodiment, when the parking lock operation request is generated, the parking lock control is performed with respect to the left and right rear wheels RL and RR, and the control brake control is performed with respect to the left and right front wheels FL and FR. That is, at the parking lock operation request, the braking force by the hydraulic pressure unit 3 is acted to the left and right front wheels FL and FR to which the parking lock mechanism is not set. Accordingly, the rotations of the left and right rear wheels RL and RR which are the parking lock wheels are not stopped during the parking lock operation. Therefore, when the timings of the locks of the left and right parking lock mechanisms 41C and 41D are deviated, the rotation of one of the parking lock wheels in which the parking lock has not been finished is not inhibited. With this, it is possible to prevent the vehicle from stopping in a state in which the parking pawl is not engaged with the parking gear in one of the left and right parking lock mechanisms 41C and 41D in which the lock timing is delayed.

In particular, the one side skid and the rearward movement of the vehicle tends to be generated in a case in which the parking pawls are not engaged with the parking gears on the low µ road whose the road surface µ (the road surface frictional coefficient) is low, which is slippery, and at the uphill road at which the road gradient is large. However, even when the lock timing is delayed, the rotation of the parking lock wheel is not inhibited. Accordingly, the vehicle is not stopped without the engagement of the parking pawl with the parking gear. Consequently, it is possible to prevent the generation of the one side skid and the rearward movement of the vehicle even at the low µ road and the uphill road.

Then, even when the difference of the braking forces between the left and the right in the in-wheel motor vehicle 1 is generated by the deviation of the lock timings of the left and right parking lock mechanisms 41C and 41D, the hydraulic pressure brake unit 3 brakes the left and right front wheels FL and FR. Therefore, it is possible to suppress the generation of the yaw due to the difference of the left and right braking forces, and to prevent the generation of the unstable vehicle behavior of the one side skid, the rotation and so on.

### [High Vehicle Speed]

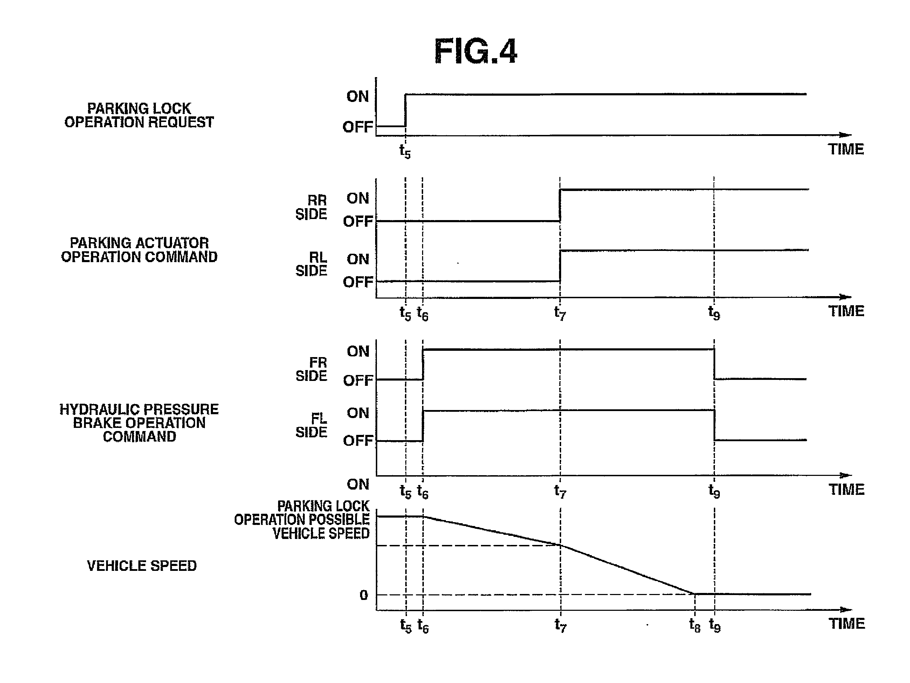

FIG. 4 is a time chart showing characteristics of the parking lock operation request, the parking actuator operation command, the hydraulic pressure operation command, and the vehicle speed in a case in which the vehicle speed is larger than the parking lock operation possible vehicle speed at the output of the parking lock operation request in the in-wheel motor vehicle to which the parking lock device according to the first embodiment is applied.

In the in-wheel motor vehicle 1 to which the parking lock device for the vehicle according to the first embodiment is applied, when the parking operation switch 43 is operated to the ON state at a time t5 shown in FIG. 4, the parking lock operation request is switched to the ON state.

With this, in the flowchart shown in FIG. 2, the process proceeds along step S1→step S2→step S3. The vehicle speed state is judged.

When the vehicle speed is greater than the parking lock operation possible vehicle speed at a time t6, the process proceeds to step S6. The hydraulic pressure brake operation command is outputted. With this, the control brake control is performed with respect to the left and right front wheels FL and FR by the hydraulic pressure brake unit 3. By performing the control brake control, the braking force is acted to the left and right front wheels FL and FR. Accordingly, the vehicle speed is gradually decreased after the time t6.

Then, in the flowchart shown in FIG. 2, the process proceeds along step S7→step S8. The vehicle speed state is again judged. The judgment whether or not the vehicle speed is equal to or smaller than the parking lock operation possible vehicle speed is repeated (It is repeated to judge whether or not the vehicle speed is equal to or smaller than the parking lock operation possible vehicle speed).

When the vehicle speed reaches the parking lock operation possible vehicle speed at the time t7, it is judged that the answer is YES at step S8. The process proceeds to step S9. The parking actuator operation command is outputted. With this, the parking lock control is performed with respect to the left and right rear wheels RL and RR by the parking lock unit 4.

Then, the process proceeds along step S10→step S11. When the vehicle speed becomes zero at a time t8, the process proceeds to step S12 at a time t9. The control brake control with respect to the left and right front wheels FL and FR by the hydraulic pressure brake unit 3 is released.

In this way, in the parking lock device according to the first embodiment, when the vehicle speed is greater than the parking lock operation possible vehicle speed at the generation of the parking lock request, first, the control brake control is performed with respect to the left and right front wheels FL and FR. Then, when the vehicle speed becomes equal to or smaller than the parking lock operation possible vehicle speed, the parking lock control is performed with respect to the left and right rear wheels RL and RR. With this, the operation of the parking lock in the high vehicle speed state is prevented. That is, the parking lock operation by the left and right parking lock mechanisms 41C and 41D is performed when the vehicle speed becomes equal to or smaller than the constant speed (the parking lock operation possible vehicle speed). Therefore, even when the lock timings of the left and right parking lock mechanisms 41C and 41D are deviated so that the yaw due to the left and right braking force difference is generated in the in-wheel motor vehicle 1, it is possible to decrease that yaw, and to prevent the generation of the unstable vehicle behavior such as the skid, the rotation.

Moreover, by preventing the operation of the parking lock in the high vehicle speed state, the parking pawl is not rotated when the parking gear is rotated at the high speed in the left and right parking lock mechanisms 41C and 41D. With this, it is possible to decrease the impact torque inputted to the parking gear and the parking pawl when the parking gear and the parking pawl are engaged, and to decrease the necessary strength in the left and right parking lock mechanisms 41C and 41D. Accordingly, it is possible to decrease the size and the cost of the left and right parking lock mechanisms 41C and 41D.

Furthermore, even in the high vehicle speed state, the control brake control is performed with respect to the left and right front wheels FL and FR in accordance with the output of the parking lock operation request. With this, the braking force by the hydraulic pressure brake unit 3 is acted to the in-wheel motor vehicle 1. Accordingly, it is possible to rapidly start the vehicle braking operation with respect to the parking lock operation request.

### Next, the effects are illustrated.

In the parking lock device according to the first embodiment, it is possible to obtain the following effects.
(1) There are provided the first left and right wheels (left and right rear wheels) RL and RR; left and right parking lock means (left and right parking lock mechanisms) 41C and 41D which are an engagement type, and which fix the first left and right wheels RL and RR independently; the parking lock operation request means (the parking operation switch) 43 which requests the operation of the left and right parking lock means 41C and 41D; the second left and right wheels (the left and right front wheels) FL and FR to which the left and right parking lock means 41C and 41D are not set; the control brake means (the hydraulic pressure brake unit) 3 arranged to brake the second left and right wheels FL and FR; and the parking control means (FIG. 2) arranged to operate the control brake means 3 when the operation request of the left and right parking lock means 41C and 41D is generated. With this, it is possible to perform the stable parking lock of the in-wheel motor vehicle 1 without inhibiting the fixing operation of the first left and right wheels (left and right rear wheels) RL and RR by the left and right parking lock means 41C and 41D.
(2) There is provided the vehicle speed sensing means (left and right front wheel rotation sensors) 5A and 5B. The parking control means (FIG. 2) is arranged to, first, operate the control brake means 3 when the vehicle speed is greater than the setting speed (the parking lock operation possible vehicle speed) when the operation request of the left and right parking lock means 41C and 41D is generated, and to operate the left and right parking lock means 41C and 41D when the vehicle speed becomes equal to or smaller than the setting vehicle speed (the parking lock operation possible vehicle speed). With this, it is possible to prevent the operation (the implement of the operation) of the parking lock at the high vehicle speed, to decrease the yaw due to the left and right braking force difference, and to further prevent the generation of the unstable vehicle behavior such as the skid, the rotation or so on.

### Second Embodiment

A parking lock device for a vehicle according to a second embodiment is an example in which the braking forces acted to the first left and right wheels by the control brake means are adjusted in accordance with the deviation of the lock timings of the left and right parking lock means, and the steering angle.

### [Overall System Configuration]

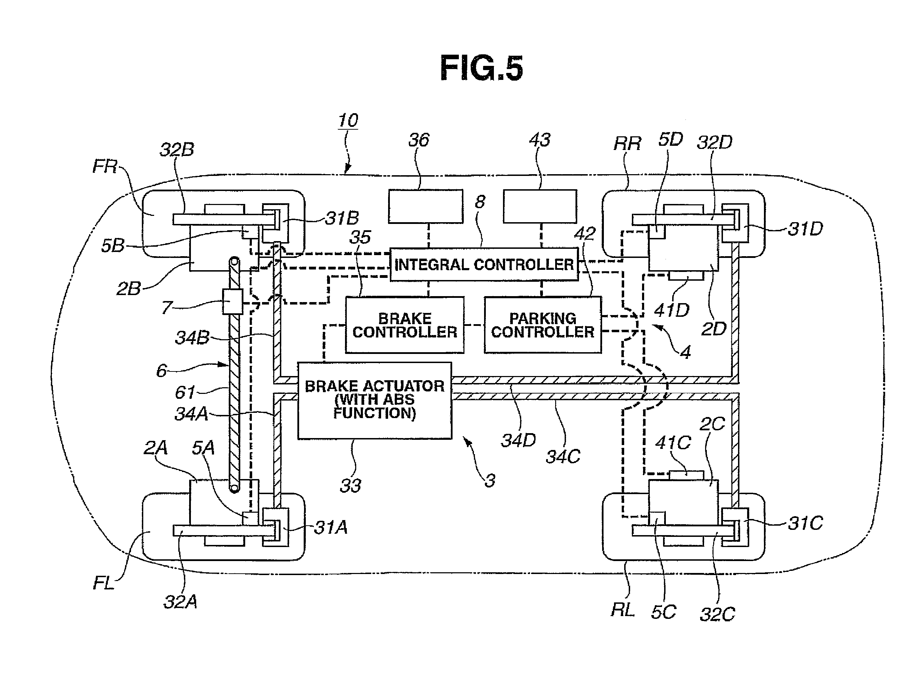

FIG. 5 is an overall system view showing an in-wheel motor vehicle to which a parking lock device according to the second embodiment is applied. Besides, the detailed explanations of the structure identical to the structure of the first embodiment are omitted by using the same symbols as the first embodiment.

As shown in FIG. 5, the in-wheel motor vehicle 10 according to the second embodiment includes left and right front wheels (the second left and right wheels) FL and FR, the left and right rear wheels (the first left and right wheels) RL and RR, the motor/generators 2A-2D installed in the wheels FL, FR, RL, and RR; and the hydraulic brake unit (the control brake means) 3; the parking lock unit 4; the left and right front wheel rotation sensors (the slip sensing means) 5A and 5B; left and right rear wheel rotation sensors (parking lock sensing means) 5C and 5D; a steering mechanism (steering) 6; a steering angle sensor (steering angle sensing means) 7; and an integral controller 8.

The left and right front wheel rotation sensors 5A and 5B are provided, respectively, to the left and right front wheels FL and FR. The left and right front wheel rotation sensors 5A and 5B sense the rotational speeds of the wheels FL and FR independently. Besides, the slip states of the left and right front wheels FL and FR are judged by calculating the wheel speeds of the left and right front wheels FL and FR based on the rotational speed signals from these left and right front wheel rotation speed sensors 5A and 5B. Accordingly, these left and right front wheel rotation sensors 5A and 5B correspond to a slip sensing means.

The left and right rear wheel rotation sensors 5C and 5D are provided, respectively, to the left and right rear wheels RL and RR. The left and right rear wheel rotation sensors 5C and 5D sense the rotational speeds of the wheels RL and RR independently. Besides, the fixations of the left and right rear wheels RL and RR by the parking lock unit 4 are judged independently based on the rotational speed signals from these left and right rear rotation speed sensors 5C and 5D. Accordingly, these left and right rear wheel rotation sensors 5C and 5D correspond to the parking lock sensing means.

The steering mechanism 6 includes a steering wheel (not shown); and a steering mechanism 61 arranged to steer the left and right front wheels FL and FR in accordance with the operation of this steering wheel.

The steering angle sensor 7 is provided to the steering mechanism 61. The steering angle sensor 7 senses the steering angles (steered angle) of the left and right front wheels FL and FR, that is, the steering angle of the steering mechanism 6.

The integral controller 8 is arranged to output the hydraulic pressure braking command to the brake controller 35 of the hydraulic pressure brake unit 3, and to output the actuator operation command to the parking controller 42 of the parking lock unit 4, in accordance with the input from the sensors and so on provided to the in-wheel motor vehicle 10. This integral controller 8 receives the brake depression signal from the brake pedal 36 of the hydraulic pressure brake unit 3. Moreover, this integral controller 8 receives the parking lock operation request or the parking lock release request from the parking operation switch 43 of the parking lock unit 4, and the rotational speeds of the left and right front wheels FL and FR from the left and right front wheel rotation sensors 5A and 5B. Furthermore, this integral controller 8 receives the rotational speeds of the left and right rear wheels RL and RR from the left and right rear wheel rotation sensors 5C and 5D, and the steering angles (steered angle) of the left and right front wheels FL and FR from the steering angle sensors 7.

### [Parking Control Configuration]

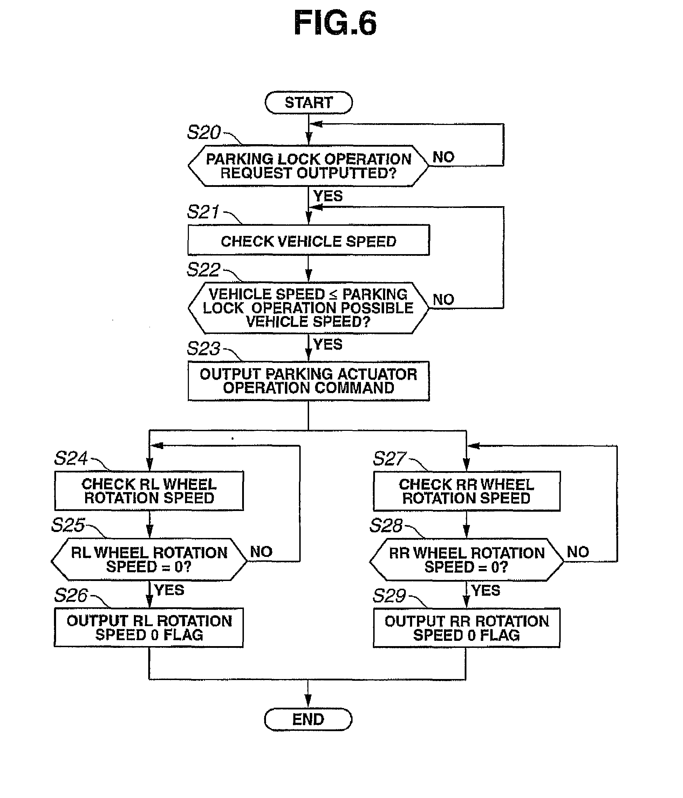

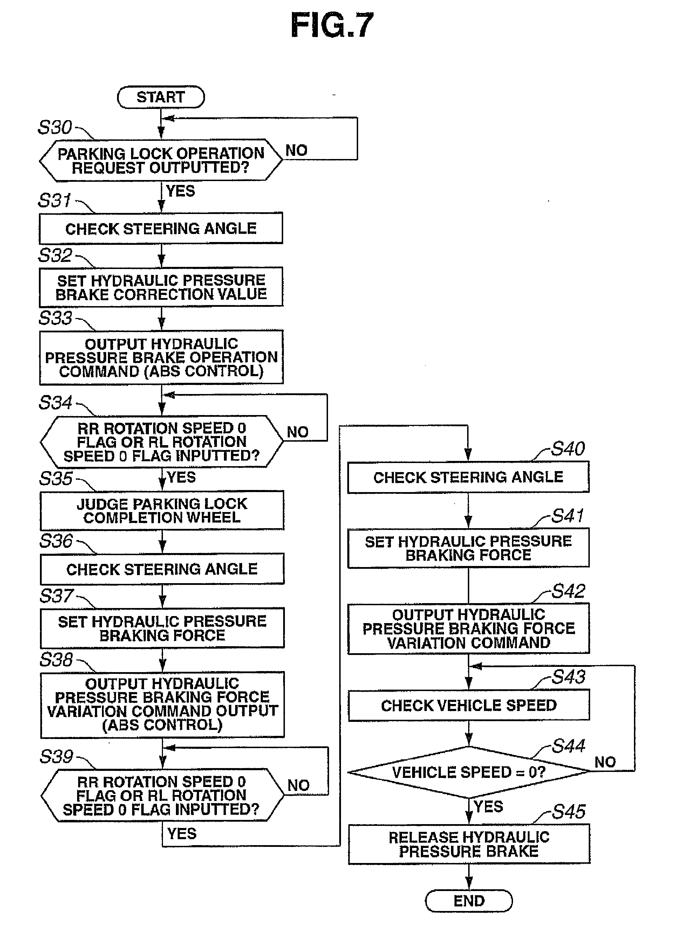

FIG. 6 is a flowchart showing a flow of the parking lock operation performed in the in-wheel motor vehicle to which the parking lock device according to the second embodiment is applied. FIG. 7 is a flowchart showing a flow of the hydraulic pressure brake operation performed in the in-wheel motor vehicle to which the parking lock device according to the second embodiment is applied. Hereinafter, steps of FIG. 6 and FIG. 7 indicative of the parking control configuration are illustrated. Besides, these "parking lock operation" and "hydraulic pressure brake operation" perform the respective operations independently. These two operations correspond to a parking control means.

First, the parking lock operation is illustrated. At step S20 shown in FIG. 6, it is judged whether or not there is the output of the parking lock operation request. In case of YES (there is the request), the process proceeds to step S21. In case of NO (there is no request), the process repeats the step S20.

Subsequently to the judgment that there is the parking lock request at step S20, at step S21, the vehicle speed is checked. The process proceeds to step S22.

At step S22, it is judged whether or not the vehicle speed checked at step S21 is equal to or smaller than the predetermined setting speed, that is, the parking lock operation possible vehicle speed. In case of YES (the vehicle speed ≤ the parking lock operation possible vehicle speed), the process proceeds to step S23. In case of NO (the vehicle speed > the parking lock operation possible vehicle speed), the process returns to step S21.

### Subsequently to the judgment of the vehicle speed ≤ the parking lock operation possible vehicle speed at step S22, at step S23, the parking actuator operation command is outputted. The process proceeds to step S24 and step S27. This parking actuator operation command is outputted from the integral controller 8 to the parking controller 42. The parking pawls are pivoted, respectively, in the left and right parking lock mechanisms 41C and 41D. That is, the parking lock control is performed.

Subsequently to the output of the parking actuator operation command at step S23, at step S24, the wheel rotation speed of the left rear wheel RL is checked. The process proceeds to step S25. In this case, the wheel rotation speed of the left rear wheel RL is sensed by the left rear rotation sensor 5C.

At step S25, it is judged whether or not the wheel rotation speed of the left rear wheel RL checked at step S24 becomes zero. In case of YES (the left rear wheel RL rotation speed = zero), the process proceeds to step S26. In case of NO (the left rear wheel RL rotation speed > zero), the process returns to step S24. In this case, "the rotation speed of the left rear wheel RL is zero" represents a state in which the parking pawl and the parking gear in the left parking lock mechanism 41C are engaged, and the parking lock of the left rear wheel RL by the left parking lock mechanism 41C is finished.

Subsequently to the judgment of the left rear wheel RL rotation speed = zero, that is, the completion of the parking lock by the left parking lock mechanism 41C at step S25, at step S26, a left rear wheel RL rotation speed zero flag is outputted, and the process proceeds to the end. Besides, this "left rear wheel RL rotation speed zero flag" is stored in a memory (not shown) of the integral controller 8, and used in the hydraulic pressure brake operation.

Subsequently to the output of the parking actuator operation command at step S23, at step S27, the wheel rotation speed of the right rear wheel RR is checked. The process proceeds to step S28. In this case, the wheel rotation speed of the right rear wheel RR is sensed by the right rear wheel rotation sensor 5D.

At step S28, it is judged whether or not the wheel rotation speed of the right rear wheel RR checked at the step S27 becomes zero. In case of YES (the right rear wheel RR rotation speed = zero), the process proceeds to step S29. In case of NO (the right rear wheel RR rotation speed > zero), the process returns to step S27. In this case, "the wheel rotation speed of the right rear wheel RR is zero" represents a state in which the parking pawl and the parking gear are engaged with each other in the right parking lock mechanism 41D, and the parking lock of the right rear wheel RR by the right parking lock mechanism 41D is finished.

Subsequently to the judgment of the right rear wheel RR rotation speed = zero, that is, the completion of the parking lock by the right parking lock mechanism 41D at step S28, at step S29, a right rear wheel RR rotation speed zero flag is outputted, and the process proceeds to the end. Besides, this "right rear wheel RR rotation speed zero flag" is stored in the memory (not shown) of the integral controller 8, and used in the hydraulic pressure brake operation.

Next, the hydraulic pressure brake operation is illustrated.

At step S30 shown in FIG. 7, it is judged whether or not there is the output of the parking lock operation request. In case of YES (there is the request), the process proceeds to step S31. In case of NO (there is no request), the process repeats step S30.

Subsequently to the judgment that there is the parking lock operation request at step S30, at step S31, the steering angles of the left and right front wheels FL and FR (hereinafter, referred to as "steering angle") is checked. The process proceeds to step S32. In this case, the steering angle is sensed by the steering angle sensor 7.

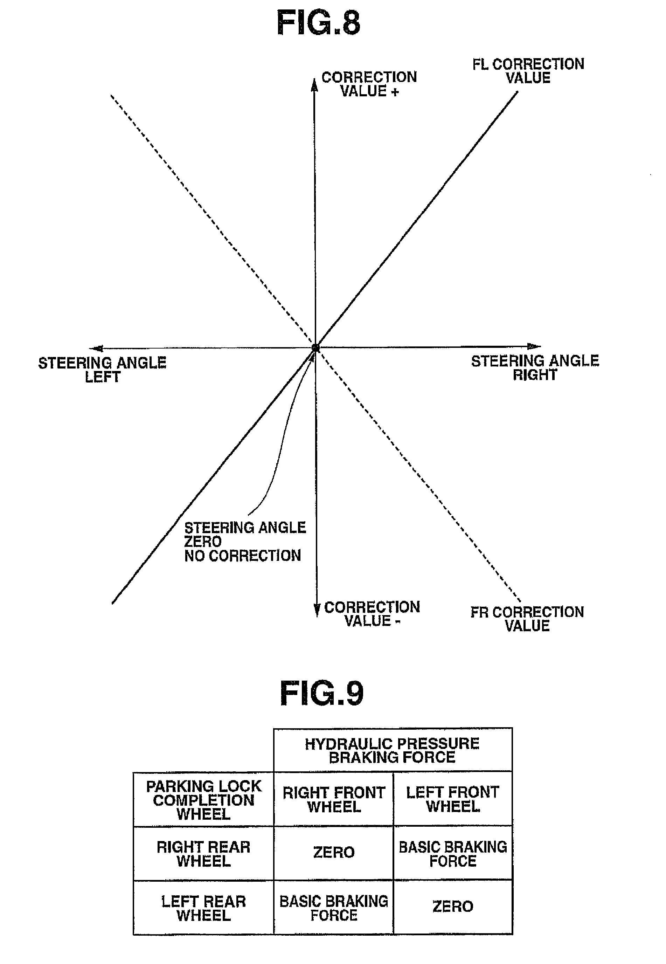

At step S32, the hydraulic pressure brake correction value for correcting the braking force acted to the left and right front wheels FL and FR by the hydraulic pressure brake unit 3 is set in accordance with the steering angle checked at the step S31. In this case, the hydraulic pressure brake correction value is set by using a map shown in FIG. 8. That is, the correction of the hydraulic pressure braking force of both of the left front wheel FL and the right front wheel FR is not performed when the steering angle is zero (the neutral position). Accordingly, the hydraulic pressure braking forces acted to the left and right wheels FL and FR are identical to each other. The hydraulic pressure braking forces acted to the wheels FL and FR become the braking force (the base braking force) which are previously set respectively.

Then, when the steering angle is generated in the right direction of the vehicle, the hydraulic pressure brake correction value acted to the left front wheel FL is set to a value to increase the braking force, and the hydraulic pressure brake correction value acted to the right front wheel FR is set to a value to decrease the braking force. With this, when the steering mechanism 6 is steered in the right direction, the hydraulic pressure braking force acted to the left front wheel FL becomes greater than the hydraulic pressure braking force acted to the right front wheel FR. Moreover, the absolute value of the correction value is increased as the steering angle becomes larger (as the steering angle in the right direction is increased). Accordingly, the difference of the left and right braking forces becomes larger in accordance with the increase of the steering angle.

On the other hand, when the steering angle in the left direction of the vehicle is generated, the hydraulic pressure brake correction value acted to the left front wheel FL is set to a value to decrease the braking force, and the hydraulic pressure brake correction value acted to the right front wheel FR is set to a value to increase the braking force. With this, when the steering mechanism 6 is steered in the left direction, the hydraulic pressure braking force acted to the right front wheel FR becomes larger than the hydraulic pressure braking force acted to the left front wheel FL. Moreover, the absolute value of the correction value is increased as the steering angle is increased (the steering angle in the left direction is increased), so that the difference between the left and right braking force is increased in accordance with the increase of the steering angle (steered angle).

Subsequently to the setting of the hydraulic pressure brake correction value at step S32, at step S33, the hydraulic pressure brake operation command is outputted, the process proceeds to step S34. The control brake control by the hydraulic brake unit 3 is performed with respect only to the left and right front wheels FL and FR to which the left and right parking lock mechanisms 41C and 41D are not set, by the output of this hydraulic pressure brake operation command. In this case, the hydraulic pressure braking forces acted to the wheels FL and FR are independently set in the left and the right by summing the predetermined setting braking force (the base braking force) and the hydraulic pressure brake correction value. Moreover, simultaneously to this control brake control, anti-lock brake control (ABS control) is performed. The hydraulic braking forces acted to the wheels FL and FR are controlled so that the wheels FL and FR are not slipped in accordance with the slip states of the wheels FL and FR.

Subsequently to the output of the hydraulic pressure brake operation command at step S33, at step S34, it is judged whether or not one of the left rear wheel RL rotation speed zero flag and the right rear wheel RR rotation speed zero flag is inputted. In case of YES (there is the flag input), the process proceeds to step S35. In case of NO (there is no flag input), the process repeats the step S34. Besides, this left rear wheel RL rotation speed zero flag and the right rear wheel RR rotation speed zero flag are outputted in the parking lock operation shown in FIG. 6.

Subsequently to the judgment that there is the flag input at step S34, at step S35, the wheel in which the parking lock has been finished is judged. The process proceeds to step S36. In this case, the parking lock completion wheel is the left rear wheel RL or the right rear wheel RR whose the wheel rotation speed becomes zero, and in which there is the flag input.

Subsequently to the judgment of the parking lock completion wheel at step S35, at step S36, the steering angle is checked again. The process proceeds to step S37.

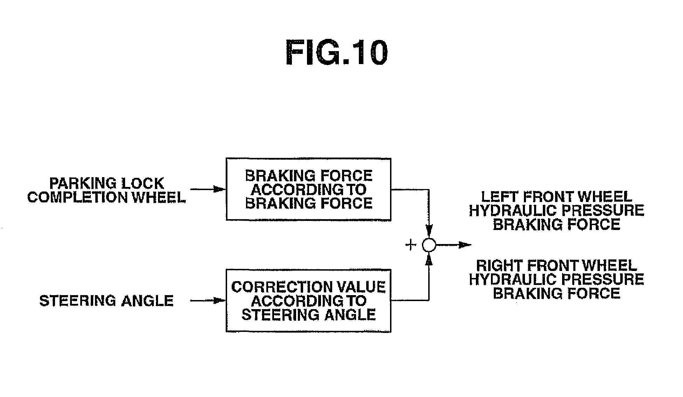

Subsequently to the check of the steering angle at step S36, at step S37, the braking forces acted to the left and right front wheels FL and FR by the hydraulic pressure brake unit 3 are set in accordance with the parking lock completion wheel which is judged at step S35, and the steering angle checked at step S36. In this case, as shown in a table of FIG. 9, first, the hydraulic pressure braking force is set in accordance with the parking lock completion wheel. That is, when the parking lock completion wheel is the right rear wheel RR, the hydraulic pressure braking force acted to the right front wheel FR is set to zero. The hydraulic pressure braking force acted to the left front wheel FL is set to the base braking force. Moreover, when the parking lock completion wheel is the left rear wheel RL, the hydraulic pressure braking force acted to the right front wheel FR is set to the basic braking force, and the hydraulic pressure braking force acted to the left front wheel FL is set to zero.
Next, by using the map shown in FIG. 8, the hydraulic pressure braking force correction value according to the steering angle checked at step S36 is set. Then, as shown in FIG. 10, the hydraulic pressure braking forces acted to the left and right front wheels FL and FR are independently set by summing the hydraulic pressure braking force correction value according to the steering angle, to the hydraulic pressure braking force set in accordance with the parking lock completion wheel.

Subsequently to the setting of the hydraulic pressure braking force at step S37, at step S38, the variation command of the hydraulic pressure braking force is outputted. The process proceeds to step S39. With this, the hydraulic pressure braking force acted to the left and right front wheels FL and FR are varied. Besides, the anti-lock brake control (ABS control) is also performed at this time.

Subsequently to the variation of the hydraulic pressure braking force at step S38, at step S39, it is judged whether or not the other of the left rear wheel RL rotation speed zero flag and the right rear wheel RR rotation speed zero flag which has not been inputted at step S34 is inputted. In case of YES (there is the flag input), the process proceeds to step S40. In case of NO (there is no flag input), the process repeats the step S39.

Subsequently to the input of the flag at step S39, at step S40, the steering angle is checked again, the process proceeds to step S41.

Subsequently to the check of the steering angle at step S40, at step S41, the braking forces acted to the left and right front wheels FL and FR by the hydraulic pressure brake unit 3 are set. At this time, the hydraulic pressure braking forces acted to the left and right front wheels FL and FR are independently set in the left and the right by summing the predetermined set braking force (basic braking force), and the braking force correction value and the hydraulic pressure which accord to the steering angle checked at step S40.

Subsequently to the setting of the hydraulic pressure braking force at step S41, at step S42, the variation command of the hydraulic pressure braking force is outputted, and the process proceeds to step S43. With this, the hydraulic pressure braking forces acted to the left and right front wheels FL and FR are varied. Besides, at this time, the anti-lock brake control (ABS control) is performed.

Subsequently to the variation of the hydraulic pressure braking force at step S42, at step S43, the vehicle speed is checked. The process proceeds to step S44.

At step S44, it is judged whether or not the vehicle speed checked at the step S43 is zero. In case of YES (the vehicle speed = zero), the process proceeds to step S45. In case of NO (the vehicle speed > zero), the process returns to step S43.

Subsequently to the judgment of the vehicle speed = zero at step S44, at step S45, the hydraulic brake is released. The process proceeds to the end.

Next, the parking control operation of the parking lock device of the vehicle according to the second embodiment is illustrated.

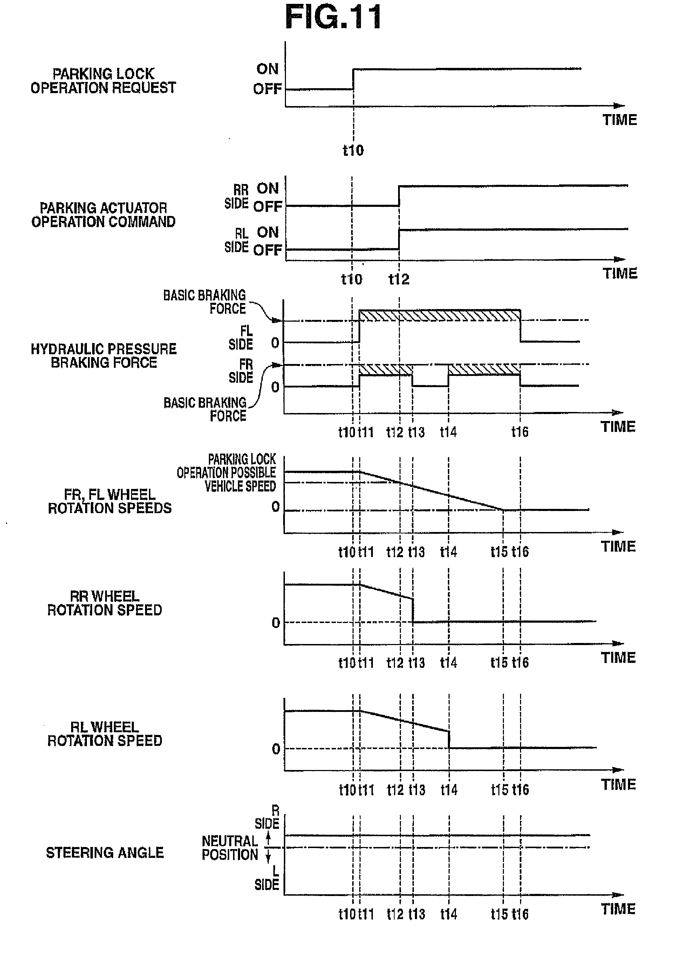

FIG. 11 is a time chart showing characteristics of the parking lock operation request, the parking actuator operation command, the hydraulic pressure braking force, the FR and FL wheel rotation speeds, the RR wheel rotation speed, the RL wheel rotation speed, and the steering angle at the output of the parking lock operation request in the in-wheel motor vehicle to which the parking lock device according to the second embodiment is applied.

In the in-wheel motor vehicle 10 to which the parking lock device of the vehicle according to the second embodiment is applied, when the parking operation switch 43 is switched to the ON state at time t10 shown in FIG. 11, the parking lock operation request is brought to the ON state.

With this, in the flowchart shown in FIG. 6, the process proceeds along step S20→step S21→step S22. The vehicle speed state is judged. At time t10, the vehicle speed is greater than the parking lock operation possible vehicle speed. Accordingly, the parking actuator operation command is not outputted.

Moreover, in the flowchart shown in FIG. 7, the process proceeds along step S30→step S31→step S32.

With this, the steering angle in the steering mechanism 6 is checked. The correction values of the hydraulic pressure braking forces with respect to the left and right front wheels FL and FR according to this steering angle are set in the respective wheels FL and FR based on the map shown in FIG. 8.

At time t11, the correction values of the hydraulic pressure braking forces according to the steering angle are obtained. The process proceeds to step S33. The hydraulic pressure brake operation command is outputted. With this, the control brake control by the hydraulic pressure brake unit 3 is performed with respect to the left and right front wheels FL and FR. At this time, the hydraulic pressure braking forces acted to the wheels FL and FR become a value obtained by summing the correction values obtained at step S32 to the base braking force. That is, at time t10, the steering angle is steered in the rightward direction. Accordingly, the hydraulic pressure braking force acted to the left front wheel FL becomes a value greater than the base braking force. Moreover, the hydraulic pressure braking force acted to the right front wheel FR is a value smaller than the base braking force.

Then, the braking forces are acted to the left and right front wheels FL and FR by performing this control brake control. Accordingly, the rotation speeds of the left and right front wheels FL and FR, and the left and right rear wheels RL and RR are gradually decreased after time t11. Moreover, during the control brake control (while the hydraulic pressure braking forces are acted to the left and right front wheels FL and FR) after this time t11, the anti-lock brake control (ABS control) is concurrently performed. Consequently, the hydraulic pressure braking forces acted to the left and right front wheels FL and FR are continued to be controlled in accordance with the slip states of the wheels FL and FR so as not to slip. Moreover, at time t11, the vehicle speed is greater than the parking lock operation possible vehicle speed. In the flowchart shown in FIG. 6, the process repeats step S21→step S22.

At time t12, when the vehicle speed reaches the parking lock operation possible vehicle speed, the process proceeds to step S23 in the flowchart shown in FIG. 6. The parking actuator operation command is outputted. With this, the parking lock control is performed by the parking lock unit 4 with respect to the left and right rear wheels RL and RR. Then, the process proceeds along step S24→step S25. It is monitored whether or not the rotation speed of the left rear wheel RL becomes zero, that is, the parking lock of the left rear wheel RL by the left parking lock mechanism 41C is finished. Moreover, the process proceeds along step S27→step S28. It is monitored whether or not the rotation speed of the right rear wheel RR becomes zero, that is, the parking lock of the right rear wheel RR by the right parking lock mechanism 41D is finished.

At time t13, when it is judged that the wheel rotation speed of the right rear wheel RR becomes zero, and the parking lock of the right rear wheel RR is finished, the process proceeds from the step S28 to step S29 in the flowchart shown in FIG. 6. The "right rear wheel RR rotation speed zero flag" is outputted. Besides, the wheel rotation speed of the left rear wheel RL is not zero. Accordingly, the process repeats step S24→step S25 in the flowchart shown in FIG. 6.

Then, the process proceeds along step S34→step S35→step S36→step S37→step S38 in the flowchart shown in FIG. 7. It is judged that the parking lock completion wheel is judged (the right rear wheel in this case). The steering angle is checked. Moreover, the hydraulic pressure braking force with respect to the left and right front wheels FL and FR are set based on the map shown in FIG. 8, and the table shown in FIG. 9. The braking force variation command is outputted. Consequently, the braking forces acted to the wheels FL and FR are varied. That is, the "right rear wheel RR rotation speed zero flag" is outputted at time t13. Accordingly, the hydraulic pressure braking force acted to the left front wheel FL is set to the basic braking force. On the other hand, the hydraulic pressure braking force acted to the right front wheel FR is set to zero. Moreover, the steering angle is steered in the rightward direction at time t13. Accordingly, the hydraulic pressure braking force acted to the left front wheel FL becomes a value greater than the basic braking force. Moreover, the hydraulic pressure braking force acted to the right front wheel FR is maintained to the zero.

At time t14, when it is judged that the wheel rotation speed of the left rear wheel RL becomes zero, and the parking lock of the left rear wheel RL is finished, the process proceeds from the step S25 to step S26 in the flowchart shown in FIG. 6. The "left rear wheel RL rotation speed zero flag" is outputted.

Then, the process proceeds along step S39→step S40→step S41→step S42 in accordance with the output of this "left rear wheel RL rotation speed zero flag" in the flowchart shown in FIG. 7. The steering angle is checked. The hydraulic pressure braking force with respect to the left and right front wheels FL and FR are set again based on the map shown in FIG. 8. Moreover, the braking force variation (correction) command is outputted. The braking forces acted to the wheels FL and FR are varied. That is, it is judged that the parking locks of both of the left and right rear wheels RL and RR are completed, by the output of the "left rear wheel RL rotation speed zero flag" at time t14. Both of the hydraulic pressure braking force acted to the left and right front wheels FL and FR are set to the base braking force. Moreover, since the steering angle at step t14 are steered in the rightward direction, the hydraulic pressure braking force acted to the left front wheel FL becomes a value greater than the basic braking force. Furthermore, the hydraulic pressure braking force acted to the right front wheel FR becomes a value smaller than the base braking force.

Then, the process proceeds along step S43→step S44. When the vehicle speed becomes zero at time t15, the process proceeds to step S45 at time t16. The control brake control by the hydraulic pressure brake unit 3 with respect to the left and right front wheels FL and FR is released.

In this way, in the parking lock device according to the second embodiment, when the parking lock timings of the left and right rear wheels RL and RR by the parking lock unit 4 are deviated, the hydraulic pressure braking force acted to the right front wheel FR located on the same side (that is, the right side) as the right rear wheel RR which is park-locked in first is decreased. That is, as shown in FIG. 9, in the right front wheel FR located on the same side as the right rear wheel RR which is park-locked in first, the hydraulic pressure braking force is set to zero. On the other hand, in the left front wheel FL located on a side opposite to the right rear wheel RR which is park-locked, the hydraulic pressure braking force is set to the base braking force.

With this, the right rear wheel RR is park-locked in first. Accordingly, even when the braking force acted to this right rear wheel RR becomes greater than the braking force acted to the left rear wheel RL, it is possible to suppress the increase of the total braking force on the right side of the in-wheel motor vehicle 10. That is, by decreasing the hydraulic pressure braking force of the right front wheel FR located on the same side in accordance with the increase of the braking force acted to the right rear wheel RR in accordance with the completion of the parking lock, it is possible to suppress the summation of the braking force acted to the right front wheel FR and the braking force acted to the right rear wheel RR, that is, the increase of the total braking force on the right side of the in-wheel motor vehicle 10. Consequently, it is possible to suppress the increase of the difference of the left and right braking forces due to the parking lock timings, to prevent the generation of the yaw, and to further effectively prevent the generation of the unintended vehicle behavior (which is not intended) such as the side slip and the rotation.

Moreover, in the parking lock device according to the second embodiment, the hydraulic pressure braking forces acted to the left and right front wheels FL and FR are independently controlled in accordance with the steering angle. That is, when the steering angle is in the rightward direction as shown in FIG. 11, the correction value of the hydraulic pressure braking force acted to the left front wheel FL is increased, and the correction value of the hydraulic pressure braking force acted to the right front wheel FR is decreased. Therefore, the hydraulic pressure braking force acted to the front wheel (the right front wheel FR in this case) in the steering direction (steered direction) by the steering mechanism 6 is decreased. The hydraulic pressure braking force acted to the front wheel (the left front wheel FL) located on the opposite side of the steering direction is increased.

That is, by steering the steering mechanism 6 in the rightward direction, the in-wheel motor vehicle 10 is run in the rightward direction. At this time, the force rotating the vehicle body in the leftward direction is acted to the front side portion (the left and right front wheels FL and FR) of the vehicle body. With this, it is possible to prevent the vehicle body from rotating more than necessary by increasing the steering operation by the steering mechanism 6. Moreover, it is possible to suppress the generation of the excessive yaw, and to further effectively prevent the generation of the unintended vehicle behavior such as the rotation.

Then, in the parking lock device according to the second embodiment, at the control brake control by the hydraulic pressure brake unit 3 with respect to the left and right front wheels FL and FR, that is, while the hydraulic pressure braking force is acted to the left and right front wheels FL and FR, simultaneously, the anti-lock brake control (ABS control) is performed. With this, the hydraulic pressure braking force acted to the wheels FL and FR are controlled in accordance with the slip states of the left and right front wheels FL and FR. With this, the slippage of the wheels FL and FR are prevented.

Accordingly, during a time period before the vehicle is stopped, in the left and right front wheels FL and FR which are not provided with the left and right parking lock mechanisms 41C and 41D, it is possible to maintain the frictional forces between the tires and the road surface to the high state. Consequently, it is possible to stop the in-wheel motor vehicle 10 by the relatively short braking distance. Moreover, in the left and right front wheels FL and FR, the frictional forces acted to the tires are maintained to the state near the static frictional force. Accordingly, in the left and right rear wheels RL and RR which are provided with the left and right parking lock mechanisms 41C and 41D, the generation of the slippages are also prevented. Therefore, it is possible to smoothly proceed to the static frictional state in the left and right rear wheels RL and RR. It is possible to ensure the large frictional forces between the tires and the road surface. Consequently, even when the lock timings by the parking lock unit 4 are deviated, it is possible to prevent the one side skid, the rearward movement and so on of the vehicle on the low µ road and the uphill road.

### Next, effects are illustrated.

In the parking lock device of the vehicle according to the second embodiment, it is possible to obtain the following effects.

(3) There are provided a parking lock sensing means (left and right rear wheel rotation sensors) 5C and 5D arranged to independently sense the fixations of the first left and right wheels (left and right rear wheels) RL and RR by the left and right parking lock means (the left and right parking lock mechanisms) 41C and 41D. The control brake means (the hydraulic pressure brake unit) 3 includes a left and right brake means (brake actuator) 33 which independently brake the second left and right wheels (the left and right front wheels). When the one of the first left and right wheels RL and RR is fixed by the left and right parking lock means 41C and 41D, the parking control means (FIG. 6 and FIG. 7) is arranged to decrease the braking force of the left and right brake means 33 which is acted to the wheel (one, one wheel) of the second left and right wheels which is located on the same side as the one of the first left and right wheels RL and RR that is fixed by the left and right parking lock means 41C and 41D. With this, it is possible to suppress the generation of the yaw due to the difference of the left and right braking forces of the vehicle due to the deviation of the parking lock timings, and to further effectively prevent the generation of the unintended vehicle behavior.

(4) There is provided slip sensing means (left and right front wheel rotation sensors) 5A and 5B arranged to sense the slip states of the second left and right wheels (the left and right front wheels) FL and FR. The parking control means (FIG. 6 and FIG. 7) is arranged to control the braking force of the control brake means (the hydraulic pressure brake unit) 3 acted to the second left and right wheels FL and FR in accordance with the slip state of the second left and right wheels FL and FR. With this, it is possible to maintain the frictional forces between the tires and the road surface in the high state. Moreover, it is possible to stop by the relative short movement distance. Furthermore, even when the lock timings by the parking lock unit 4 are deviated, it is possible to prevent the one side skid, the rearward movement of the vehicle on the low µ road and the uphill road.

(5) There is provided steering angle sensing means (steering angle sensor) 7 arranged to sense the steering angle of the steering (the steering mechanism) 6. The brake means (the hydraulic pressure brake unit) 3 includes left and right brake means (brake actuators) 33 which are arranged to independently brake the second left and right wheels (the left and right front wheels) FL and FR. The parking control means (FIG. 6 and FIG. 7) is arranged to independently control the braking forces of the left and right brake means 33 acted to the second left and right wheels FL and FR in accordance with the steering angle of the steering 6. Accordingly, it is possible to suppress the generation of the excessive yaw, and to further effectively prevent the generation of the unintended vehicle behavior such as the rotation.

### Third Embodiment

A parking lock device for the vehicle according to the third embodiment is an example to secure (ensure) the stop state of the vehicle when the parking lock has not been finished.

### [Overall System Configuration]

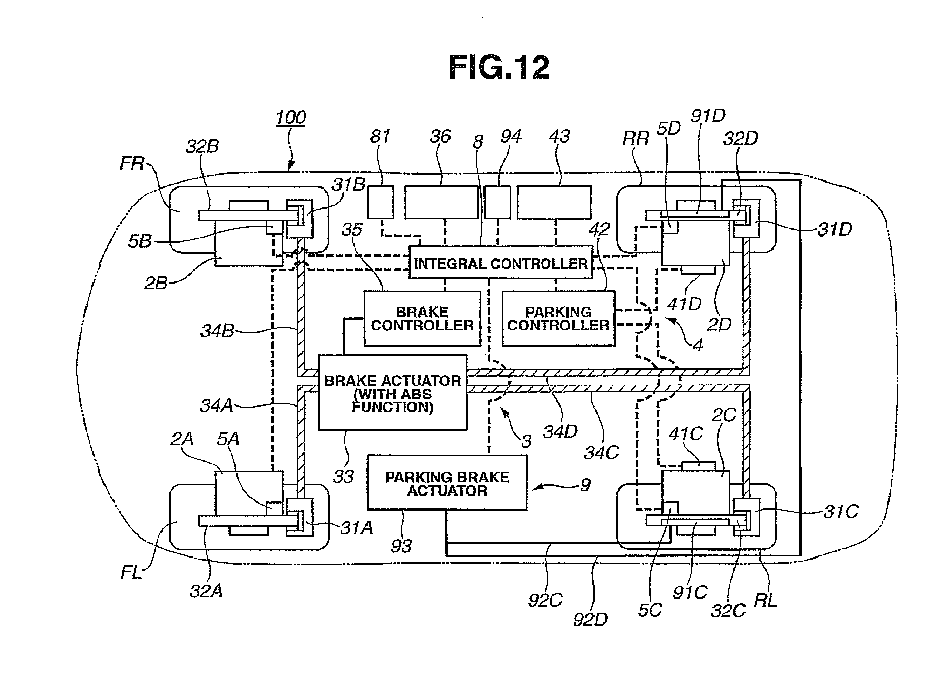

FIG. 12 is an overall system view showing an in-wheel motor vehicle to which the parking lock device according to the third embodiment is applied. Besides, the detailed explanations of the same structure as the first embodiment or the second embodiment are omitted by using the same symbols as the first embodiment or the second embodiment.

As shown in FIG. 12, the in-wheel motor vehicle 100 according to the third embodiment includes the left and right front wheels (the second left and right wheels) FL and FR; the left and right rear wheels (the first left and right wheels) RL and RR; the motor/generators 2A-2D which are installed, respectively, in the wheels FL, FR, RL, and RR; the hydraulic brake unit (the control brake means, the parking lock wheel control brake means) 3; the parking lock unit 4; the left and right front wheel rotation sensors (the vehicle stop sensing means) 5A and 5B; the left and right wheel rotation sensors (the parking lock wheel rotation sensing means) 5C and 5D; the integral controller 8; and the parking brake unit (the mechanical brake means) 9.

Similarly to the first embodiment, the hydraulic pressure brake unit 3 performs the brakings of the wheels FL, FR, RL, and RR independently. Accordingly, the hydraulic pressure brake unit 3 brakes the left and right rear wheels RL and RR provided with the left and right parking lock mechanisms 41C and 41D. Therefore, this hydraulic brake unit 3 corresponds to the parking lock wheel control means.

The left and right wheel rotation sensors 5A and 5B are provided, respectively, to the left and right front wheels FL and FR. The left and right wheel rotation sensors 5A and 5B are arranged to independently sense the rotation speeds of the wheels FL and FR. Besides, the vehicle speed is determined based on the rotation speed signals from these left and right front wheel rotation speed sensors 5A and 5B. The stop of the in-wheel motor vehicle 100 is sensed from this vehicle speed. Therefore, these left and right front wheel rotation sensors 5A and 5B correspond to the vehicle stop sensing means.

In accordance with the input from the sensors and so on which are provided to the in-wheel motor vehicle 100, the integral controller 8 is arranged to output the hydraulic pressure braking command to the brake controller 35 of the hydraulic pressure brake unit 3, to output the actuator operation command to the parking controller 42 of the parking lock unit 4, and to display a predetermined operation waning to a warning display device 81 provided inside the vehicle. In this case, the warning display device 81 is, for example, a part of a meter provided in an instrument panel. This warning display device 81 is arranged to display a parking brake operation warning, and a parking lock wheel brake operation warning. The "parking brake operation warning" is a warning to prompt the driver to perform the braking operation of the left and right rear wheels RL and RR by the parking brake unit 9. The "parking lock wheel brake operation warning" is a warning to prompt the driver to perform the braking operation of the left and right rear wheels RL and RR by the hydraulic pressure brake unit 3.

The parking brake unit 9 is a mechanical brake means to brake the left and right rear wheels RL and RR by driving by the mechanical structure. This parking brake unit 9 includes brake main bodies 91C and 91D installed in the brake discs 32C and 32D; a parking brake actuator 93 mechanically connected to the brake main bodies 91C and 91D through brake wires 92C and 92D; and a brake operation section 94 arranged to output the operation request or the release request of this parking brake actuator 93. Then, in the parking brake unit 9, by switching the brake operation section 94 to the ON state, the parking brake command is outputted from the integral controller 8. The parking brake actuator 93 is actuated to pull the brake wires 92C and 92D. With this, the brake main bodies 91C and 91D are pressed, respectively, against the brake discs 32C and 32D to brake the left and right rear wheels RL and RR by the friction. Moreover, by switching the brake operation section 94 to the OFF state, the parking brake release command is outputted from the integral controller 8. The parking brake actuator 93 is actuated to press and return the brake wires 92C and 92D. With this, the brake main bodies 91C and 91D are separated, respectively, from the brake discs 32C and 32D to release the brakings of the left and right rear wheels.

### [Parking Control Configuration]

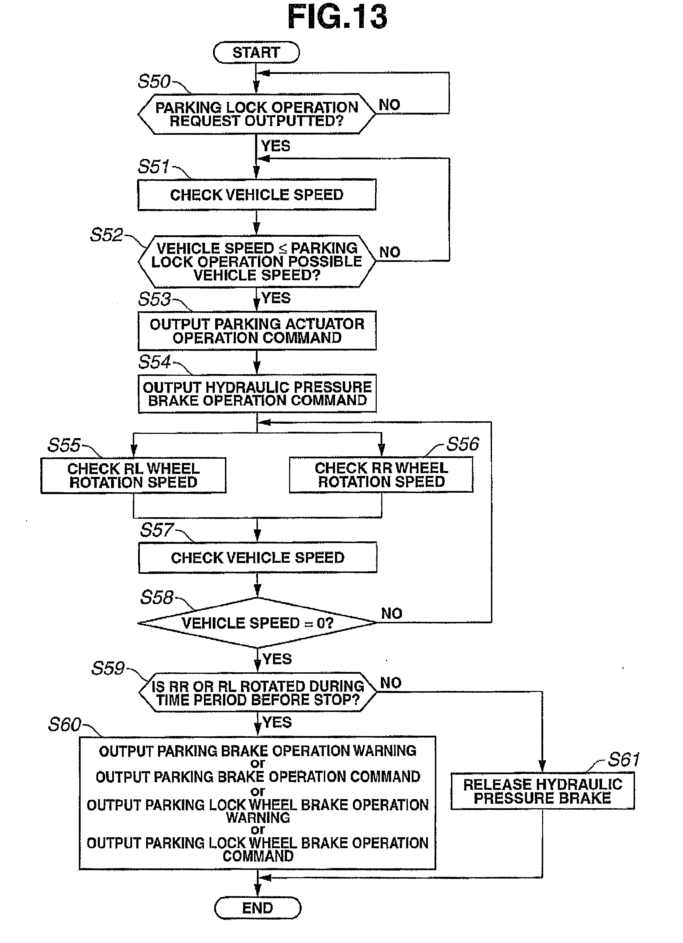

FIG. 13 is a flowchart showing a flow of the parking control operation (the parking control means) performed in the in-wheel motor vehicle to which the parking lock device according to the third embodiment is applied. Hereinafter, steps of FIG. 13 representing the parking control configuration are illustrated.

At step S50, it is judged whether or not there is the output of the parking lock operation request. In case of YES (there is the request), the process proceeds to step S51. In case of NO (there is no request), the process repeats step S50.

Subsequently to the judgment that there is the parking lock request at step S50, at step S51, the vehicle speed is checked. The process proceeds to step S52.

At step S52, it is judged whether or not the vehicle speed checked at step S51 is equal to or smaller than the predetermined setting speed, that is, the parking lock operation possible vehicle speed. In case of YES (the vehicle speed ≤ the parking lock operation possible vehicle speed), the process proceeds to step S53. In case of NO (the vehicle speed > the parking lock operation possible vehicle speed), the process returns to step S51.

Subsequently to the judgment of vehicle speed ≤ the parking lock operation possible vehicle speed at step S52, at step S53, the parking actuator operation command is outputted. The process proceeds to step S54. By this output of this parking actuator operation command, the parking pawls are pivoted, respectively, in the left and right parking lock mechanisms 41C and 41D. That is, the parking lock control is performed.

Subsequently to the output of the parking actuator operation command at step S53, at step S54, the hydraulic pressure brake operation command is outputted. The process proceeds to step S55 and step S56. By this output of this hydraulic pressure brake operation command, the control brake control by the hydraulic pressure brake unit 3 is performed with respect only to the left and right front wheels FL and FR which are not provided with the left and right parking lock mechanisms 41C and 41D.

Subsequently to the output of the hydraulic pressure brake operation command at step S54, at step S55, the wheel rotation speed of the left rear wheel RL is checked. The process proceeds to step S57. In this case, the wheel rotation speed of the left rear wheel RL is sensed by the left rear wheel rotation sensor 5C.

Subsequently to the output of the hydraulic pressure brake operation command at step S54, at step S56, the wheel rotation speed of the right rear wheel RR is checked. The process proceeds to step S57. In this case, the wheel rotation speed of the right rear wheel RR is sensed by the right rear wheel rotation sensor 5D.

Subsequently to the check of the left rear wheel RL rotation speed and the check of the right rear wheel RR rotation speed at step S55, at step S57, the vehicle speed is checked. The process proceeds to step S58.

At step S58, it is judged whether or not the vehicle speed checked at step S57 is zero. In case of YES (the vehicle speed = zero), the process proceeds to step S59. In case of NO (the vehicle speed > zero), the process returns to step S55 and step S56. In this case, "the vehicle speed is zero" represents a vehicle stop state, that is, a state in which the rotations of the left and right front wheels FL and FR which are the wheels that are not provided with the left and right parking lock mechanisms 41C and 41D are stopped.

Subsequently to the judgment of the vehicle speed = zero at step S58, at step S59, it is judged whether or not at least one of the left rear wheel RL and the right rear wheel RR is rotated, during a time period before the vehicle speed becomes zero. In case of YES (the rotation), the process proceeds to step S60. In case of NO (the non-rotation), the process proceeds to step S61. In this case, "the at least one of the left rear wheel RL and the right rear wheel RR is rotated during a time period before the vehicle speed becomes zero" represents that the parking lock in the left parking lock mechanism 41C or the right parking lock mechanism 41D is not finished even at the low vehicle speed, and that the left rear wheel RL or the right rear wheel RR is continued to be rotated for the no-completion of the parking lock. That is, when the vehicle speed becomes zero, the in-wheel motor vehicle is stopped. Accordingly, the rotation speeds of the left and right rear wheels RL and RR become zero. In this case, if the parking lock is finished before the vehicle speed becomes zero, the rotation speed of the wheel (the left rear wheel RL or the right rear wheel RR) becomes zero at timing of the parking lock irrespective of the vehicle speed. However, if the parking lock is not finished, the rotation speed of the wheel (left rear wheel RL or the right rear wheel RR) is generated at a timing immediately before the vehicle speed becomes zero.

Subsequently to the judgment that the wheel is rotated during a time period before the vehicle speed becomes zero at step S59, at step S60, one of the output of the parking brake operation warning, the output of the parking brake operation command, the output of the parking lock wheel brake operation warning, and the output of the parking lock wheel brake operation command is performed. The process proceeds to the end. In this case, when "the output of the parking brake operation warning" is performed, "the parking brake operation warning" is displaced in the warning display device 81. The driver is prompted to operate the parking brake unit 9. Moreover, when "the output of the parking brake operation command" is performed, the parking brake actuator 93 is actuated to pull the brake wires 92C and 92D. The left and right rear wheels RL and RR are braked by the frictions of the brake main bodies 91C and 91D. Moreover, when "the output of the parking lock wheel brake operation warning" is performed, "the parking lock wheel brake operation warning" is displayed in the warning display device 81. The driver is prompted to perform operation of the braking by the hydraulic pressure brake unit 3. When "the output of the parking lock wheel brake operation command" is performed, the brake hydraulic pressure set by the brake actuator 33 is transmitted to the brake calipers 31C and 31D, so that the brakings of the left and right rear wheels RL and RR are independently performed.

Subsequently to the judgment of the non-rotation of the wheel during a time period before the vehicle speed becomes zero at step S59, at step S61, the hydraulic pressure braking is released, and the process proceeds to the end.

Next, the parking control operation of the parking lock device for the vehicle according to the third embodiment is illustrated.

In the parking lock device for the vehicle according to the third embodiment, in a case in which the at least one of the left rear wheel RL and the right rear wheel RR is rotated during the timing before the vehicle speed becomes zero at the stop of the vehicle, the process proceeds along step S58→step S59→step S60 in the flowchart of FIG. 13. One of the output of the parking brake operation warning, the output of the parking brake operation command, the output of the parking lock wheel brake operation warning, or the output of the parking lock wheel brake operation command is performed.

Then, for example, when the output of the parking brake operation warning is performed, "the parking brake operation warning" is displayed in the warning display device 81. The driver is prompted to operate the parking brake unit 9. If the driver awake to this "parking brake operation warning", and operates the brake operation section 94 of the parking brake unit 9, the parking actuator 93 is actuated. The braking forces are acted to the left and right rear wheels RL and RR by the friction of the brake main bodies 91C and 91D. With this, if the vehicle becomes the stop state when the parking lock in the left parking lock mechanism 41C or the right parking lock mechanism 41D has not finished, it is possible to prevent the rearward movement of the vehicle after the stop of the vehicle on the low µ road and the uphill road. It is possible to ensure the security by holding the stop state.

Moreover, when the output of the parking brake operation command is performed, the parking brake actuator 93 is actuated irrespective of the intention of the driver. The braking force is acted to the left and right rear wheels RL and RR by the frictions of the brake main bodies 91C and 91D. With this, even when the driver gets off the vehicle without operating the brake operation section 94 of the parking brake unit 9, it is possible to prevent the rearward movement of the vehicle after the stop of the vehicle on the low µ road and the uphill road. Moreover, it is possible to ensure the safety by holding the stop state.

Moreover, when the output of the parking lock wheel brake operation warning is performed, "the parking lock wheel brake operation warning" is displayed in the warning display device 81. The driver is prompted to operate the brake pedal 36 of the hydraulic pressure brake unit 3. If the driver awakes to this "parking lock wheel brake operation warning", and depresses the brake pedal 36 of the hydraulic pressure brake unit 3, the brake hydraulic pressure generated by the depression of the brake pedal 36 are transmitted to the brake calipers 31A-31D. The braking forces are acted to all of the wheels FL, FR, RL, and RR including the left and right rear wheels RL and RR. With this, if the vehicle becomes the stop state while the parking lock in the left parking lock mechanism 41C or the right parking lock mechanism 41D has not been completed, it is possible to prevent the rearward movement of the vehicle after the stop of the vehicle on the low µ road and the uphill road, and to ensure the safety by holding the stop state.

Then, when the output of the parking lock wheel brake operation command is performed, the brake hydraulic pressure set by the brake actuator 33 are transmitted to the brake calipers 31A-31D. The braking forces are acted to the all of the wheels FL, FR, RL, and RR including the left and right rear wheels RL and RR. With this, even after the driver gets off the vehicle, it is possible to prevent the rearward movement of the vehicle after the stop of the vehicle on the low µ road and the uphill road, and to ensure the safety by holding the stop state.

### Next, effects are illustrated.

In the parking lock device of the vehicle according to the third embodiment, it is possible to obtain the following effects.

(6) There are provided the vehicle stop sensing means (the left and right front wheel rotation sensors) 5A and 5B arranged to sense the stop of the vehicle (the in-wheel motor vehicle) 100; the parking lock wheel rotation sensing means (the left and right rear wheel rotation sensors) 5C and 5D arranged to independently sense the rotations of the first left and right wheels (left and right rear wheels) RL and RR; and the mechanical braking means (the parking brake unit) 9 arranged to brake the first left and right wheels RL and RR by driving by the mechanical structure. The parking control means (FIG. 13) is arranged to output the warning (the parking brake operation warning) to prompt the operation of the mechanical brake means 9, or to actuate the mechanical brake means 9, when at least one of the first left and right wheels RL and RR is rotated before the stop of the vehicle 100 is sensed. With this, even when the vehicle becomes the stop state while the parking locks of the left and right rear wheels RL and RR have not been finished, it is possible to prevent the rearward movement of the vehicle after the stop of the vehicle, and to hold the stop state.

(7) There are provided the vehicle stop sensing means (the left and right front wheel rotation sensors) 5A and 5B arranged to sense the stop of the vehicle (the in-wheel motor vehicle) 100; the parking lock wheel rotation sensing means (the left and right rear wheel rotation sensors) 5C and 5D arranged to independently sense the rotations of the first left and right wheels (the left and right rear wheels) RL and RR; and the parking lock wheel control brake means (the hydraulic pressure brake unit) 3 arranged to brake the first left and right wheels RL and RR. The parking control means (FIG. 13) is arranged to output the warning (parking lock wheel brake operation warning) to prompt the operation of the parking lock wheel control brake means 3, or to actuate the parking lock wheel control brake means 3, when the at least one of the first left and right wheels RL and RR is rotated before the stop of the vehicle 100 is sensed. With this, even when the vehicle becomes the stop state in a state in which the parking locks of the left and right rear wheels RL and RR have not been finished, it is possible to prevent the rearward movement of the vehicle after the stop of the vehicle, and to hold the stop state.

### Fourth Embodiment

The parking lock device according to a fourth embodiment is an example to ensure the stop state of the vehicle at the parking lock release.

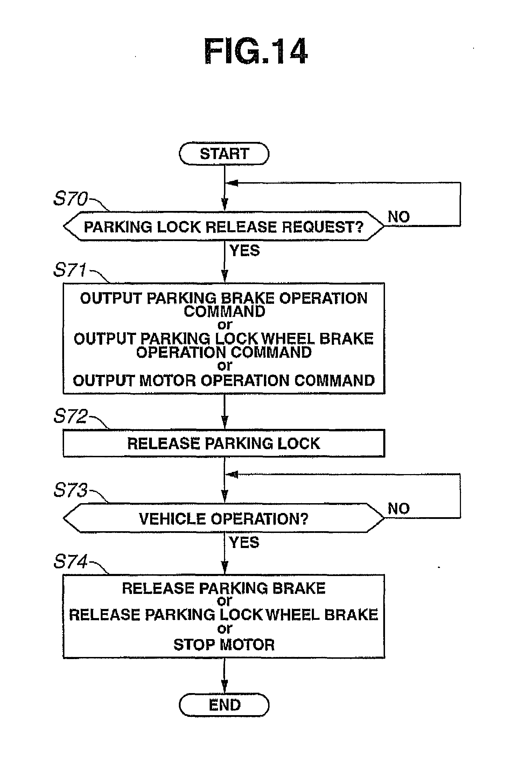

The vehicle to which the parking lock device according to the fourth embodiment is identical to that of the third embodiment shown in FIG. 12. Accordingly, the detailed explanations are omitted. FIG. 14 is a flowchart (the parking control means) showing a flow of the parking lock release operation performed in the in-wheel motor vehicle to which the parking lock device according to the fourth embodiment is applied. Hereinafter, steps of FIG. 14 showing the parking control structure are illustrated.

At step S70, it is judged whether or not there is the output of the parking lock release request. In case of YES (there is the request), the process proceeds to step S71. In case of NO (there is no request), the process repeats step S70. In this case, whether or not there is the parking lock release request are performed based on the ON/OFF operation of the parking operation switch 43. That is, when this parking operation switch 43 is operated to the OFF state, it is judged that the parking lock release request is outputted.

Subsequently to the judgment that there is the parking lock release request at step S70, at step S71, one of the output of the parking brake operation command, the output of the parking lock wheel brake operation command, and the output of the motor operation command is performed, the process proceeds to step S72. In this case, when "the output of the parking brake operation command" is performed, the parking actuator 93 is actuated to pull the brake wires 92C and 92D. The left and right rear wheels RL and RR are braked by the frictions of the brake main bodies 91C and 91D. Moreover, when "the output of the parking lock wheel brake operation command" is performed, the brake hydraulic pressure set by the brake actuator 33 is outputted to the brake calipers 31C and 31D, the brakings of the left and right rear wheels RL and RR are independently performed. Moreover, when "the output of the motor operation command" is performed, the motor/generator 2C installed in the left rear wheel RL and the motor/generator 2D installed in the right rear wheel RR are driven, so that the stop state of the vehicle is maintained. Besides, at this time, even when the motor/generators 2C and 2D are driven, the torque for rotating the left and right rear wheels RL and RR are not provided. When the wheels are rotated by the load acted to the left and right rear wheels RL and RR, for example, on the uphill road and so on, the motor/generators 2C and 2D are driven by an amount to provide the torque to act against this load.

Subsequently to the command output at step S71, at step S72, the left and right parking lock mechanisms 41C and 41D are released, the process proceeds to step S73.

At step S73, it is judged whether or not any vehicle operation is generated. In case of YES (there is the vehicle operation), the process proceeds to step S74. In case of NO (there is no vehicle operation), the process repeats the step S73. In this case, "the any vehicle operation" is an operation of the vehicle which is performed based on the vehicle operation command such as the ignition ON operation, the accelerator depression operation and so on.

Subsequently to the judgment that there is the vehicle operation at step S73, at step S74, one of the release of the parking brake, the release of the parking lock wheel brake, or the motor stop is performed, and the process proceeds to the end. In this case, "the release of the parking brake" is performed to release the parking brake 9 when the parking actuator 93 is actuated by the output of the parking brake operation command at step S71, and the braking force is acted to the left and right rear wheels RL and RR. Moreover, "the release of the parking lock wheel brake" is performed to release the hydraulic pressure brake unit 3 when the braking force is acted to the left and right rear wheels by the brake hydraulic pressures set by the brake actuator 33 by the output of the parking lock wheel brake operation command at step S71. Furthermore, "the motor stop" is performed to stop the motor/generators 2C and 2D when the motor/generators 2C and 2D are driven by the output of the motor operation command at step S71.

Next, the parking control operation of the parking lock device of the vehicle according to the fourth embodiment are illustrated.

In the parking lock device of the vehicle according to the fourth embodiment, at the generation of the release request of the left and right parking lock mechanisms 41C and 41D, the process proceeds along step S70→step S71 in the flowchart of FIG. 14. One of the output of the parking brake operation command, the output of the parking lock wheel brake operation command, the output of the motor operation command is performed. Then, the process proceeds to step S72. The left and right parking lock mechanisms 41C and 41D are released.

With this, for example, when the output of the parking brake operation command is performed, the parking lock is released in a state in which the braking force by the parking brake unit 9 is acted to the left and right rear wheels RL and RR. That is, the left and right rear wheels are held in the static state by the braking force by the parking brake unit 9, irrespective of the parking locks by the left and right parking lock mechanisms 41C and 41D. Therefore, when the backlash is generated between the parking gear and the parking pawl inside the left and right parking lock mechanisms 41C and 41D on the low µ road and the uphill road, or during the interval at the change of the depression from the brake pedal 36 to the accelerator pedal (not shown), it is possible to prevent the rearward movement of the vehicle in accordance with the release of the parking lock, and to ensure the safety by holding the stop state.

Moreover, when the output of the parking brake operation command is performed, the parking lock is released in a state in which the braking force by the hydraulic pressure brake unit 3 is acted to the left and right rear wheels RL and RR. That is, the left and right rear wheels are held in the static state by the braking force by the hydraulic pressure brake unit 3, irrespective of the parking lock by the left and right parking lock mechanisms 41C and 41D. Accordingly, it is possible to prevent the rearward movement of the vehicle at the release of the parking lock on the low µ road and the uphill road, and to ensure the safety by holding the stop state.

Furthermore, when the output of the motor operation command is performed, the parking lock is released in a state in which the vehicle stop state is held by the drive of the motor/generators 2C and 2D. That is, the vehicle becomes the stop state by the motor torque, irrespective of the parking lock by the left and right parking lock mechanisms 41C and 41D. Therefore, it is possible to prevent the rearward movement of the vehicle at the release of the parking lock on the low µ road and the uphill road, and to ensure the safety by holding the stop state.

Then, when there is the vehicle operation after the release of the left and right parking lock mechanisms 41C and 41D, the process proceeds along step S73→step S74. One of the release of the parking brake, the release of the parking lock wheel brake, or the motor stop is performed. Accordingly, it is possible to rapidly perform the vehicle operation, and to prevent the generation of the unnatural feeing of the operability.

### Next, effects are illustrated.

In the parking lock device of the vehicle according to the fourth embodiment, it is possible to obtain the following effects.

(8) There are provided the parking lock release request means (the parking operation switch) 43 arranged to request the release of the left and right parking lock means (the left and right parking lock mechanisms) 41C and 41D; and the mechanical brake means (the parking brake unit) 9 arranged to drive by the mechanical structure, and to brake the first left and right wheels (the left and right rear wheels) RL and RR. The parking control means (FIG. 14) is configured to release the left and right parking lock means 41C and 41D after the mechanical brake means 9 is actuated when the release request of the left and right parking lock means 41C and 41D are generated. With this, it is possible to prevent the rearward movement of the vehicle at the release of the parking lock on the low µ road and the uphill road, and to hold the stop state.

(9) The parking control means (FIG. 14) is arranged to release the brakings of the first left and right wheels (the left and right rear wheels) RL and RR by the mechanical brake means (the parking brake unit) 9 when there is the vehicle operation based on the vehicle operation command. With this, it is possible to rapidly perform the vehicle operation, and to prevent the generation of the unnatural feeling of the operability.

(10) There are provided the parking lock release request means (the parking operation switch) 43 configured to request the release of the left and right parking lock means (the left and right parking lock mechanisms) 41C and 41D; and the parking lock wheel control brake means (the hydraulic pressure brake unit) 3 configured to brake the first left and right wheels (the left and right rear wheels) RL and RR. The parking control means (FIG. 14) is configured to release the left and right parking lock means 41C and 41D after the parking lock wheel control brake means 3 is actuated when the release request of the left and right parking lock means 41C and 41D is generated. With this, it is possible to prevent the rearward movement of the vehicle at the release of the parking lock on the low µ road and the uphill road, and to hold the stop state.

(11) The parking control means (FIG. 14) is configured to release the brakings of the first left and right wheels (the left and right rear wheels) RL and RR by the parking lock wheel control brake means (the hydraulic pressure brake unit) 3 when there is the vehicle operation based on the vehicle operation command. With this, it is possible to rapidly perform the vehicle operation, and to prevent the generation of the unnatural feeling of the operability.

(12) There are the parking lock release request means (the parking operation switch) 43 configured to request the release of the left and right parking lock means (the left and right parking lock mechanisms) 41C and 41D; and the motors (the motor/generators) 2C and 2D configured to drive the first left and right wheels (the left and right rear wheels) RL and RR. The parking control means (FIG. 14) is configured to release the left and right parking lock means 41C and 41D after the vehicle stop state is held by actuating the motors 2C and 2D when the release request of the left and right parking lock means 41C and 41D are generated. With this, it is possible to prevent the rearward movement of the vehicle at the release of the parking lock on the low µ road and the uphill road, and to hold the stop state.

(13) The parking control means (FIG. 14) is configured to release the holding of the vehicle stop state by the actuation of the motors (the motor/generators) 2C and 2D when there is the vehicle operation based on the vehicle operation command. With this, it is possible to rapidly perform the vehicle operation, and to prevent the generation of the unnatural feeling of the operability.

Hereinabove, the parking lock device of the vehicle according to the present invention is illustrated with reference to the first embodiment to (through) the fourth embodiment. However, the concrete structure is not limited to those embodiments. The variation, the addition and so on are allowed as long as it is not deviated from the gist of the invention according to the claims.

In the above-described embodiments, the hydraulic pressure brake unit 3 is applied as the control brake means configured to brake the left and right front wheels FL and FR which are the second left and right wheels that are not provided with the left and right parking lock mechanisms 41C and 41D, and as the parking lock wheel control brake means configured to brake the left and right rear wheels RL and RR which are the first left and right wheels which is provided with the left and right parking lock mechanisms 41C and 41D. However, it is not limited to this. The regenerative brake which is generated by regenratively driving the motor/generators 2A-2D installed in the wheels FL, FR, RL, and RR may be applied as the control brake means and the parking lock wheel control braking means. Moreover, it is possible to use as the control brake means or the parking lock wheel control brake means by combining the hydraulic pressure brake unit 3 and the regenerative brake by the motor/generators 2A-2D.

Moreover, in the first embodiment, the hydraulic pressure brake operation command is outputted at step S5 after the parking actuator operation command is outputted at step S4. However, the parking actuator operation command and the hydraulic pressure brake operation command may be simultaneously outputted as long as the vehicle speed is equal to or smaller than the parking lock actuation possible vehicle speed.

Furthermore, in the third embodiment, the parking actuator 93 is actuated in accordance with the command outputted from the integral controller 8 by operating the brake operation section 94 in the ON/OFF manner in the parking brake unit 9 serving as the mechanical brake unit. However, the brake operation portion 94 and the parking actuator 93 may be mechanically by the cable and so on. In this case, at step S60 of the third embodiment, one of the output of the parking brake operation warning, the output of the parking lock wheel brake operation, and the output of the parking lock wheel brake operation is performed.

Besides, in the third embodiment, at step S60, one of the output of the parking brake operation warning, the output of the parking brake operation command, the output of the parking lock wheel brake operation warning, and the output of the parking lock wheel brake operation command is performed. However, it is not limited to this. For example, the plurality of commands such as the output of the parking brake operation command and the output of the parking lock wheel brake operation command may be outputted as long as one command is outputted.

Moreover, at step S71 of the fourth embodiment, one of the output of the parking brake operation command, the output of the parking lock wheel brake operation command, and the output of the motor operation command is performed. It is not limited to this. The plurality of commands may be outputted.

Moreover, in the above-described embodiments, the left and right rear wheels RL and RR are set to the first left and right wheels which is provided with the left and right parking lock means. The left and right front wheels FL and FR are set to the second left and right wheels which is not provided with the left and right parking lock means. However, the left and right front wheels FL and FR may be set to the first left and right wheels, and the left and right rear wheels RL and RR may be set to the second left and right wheels. Moreover, for example, in a case in which there are many left and right wheels arranged in the forward and rearward directions of the vehicle, it is the first left and right wheels as long as there are provided the left and right parking lock means. It corresponds to the second left and right wheels which is not provided with the left and right parking lock means.

Moreover, the above-described embodiments exemplifies the example in which the parking lock device of the vehicle according to the present invention is applied to the in-wheel motor vehicle 1, 10, and 100 in which the wheels FL, FR, RL, and RR are independently driven. However, the parking lock device according to the present invention is applicable to a vehicle in which the left and right driving wheels are integrally driven. Moreover, in this case, the driving source is not limited to the motor. The driving source may be only the engine. The driving source may be by combining the engine and the motor. That is, the present invention is applicable to the engine vehicle and the electromotive vehicle (the electric vehicle, the hybrid vehicle and so on) as long as the vehicle includes the left and right parking lock means of the engagement type configured to independently fix the first left and right wheels, and the control brake means configured to brake the second left and right wheels which is not provided with the left and right parking lock means.

## Claims

1. A parking lock device for a vehicle comprising:
first left and right wheels;
first left and right parking lock means of an engagement type which are arranged to fix the left and right wheels independently;
second left and right wheels which are not provided with the left and right parking lock means;
a control brake means configured to brake the second left and right wheels; and
a parking control means configured to actuate the control brake means when an operation request of the left and right parking lock means is generated.

2. The parking lock device for the vehicle as claimed in claim 1, wherein the parking lock device further comprises a vehicle speed sensing means; the parking control means is configured to, first, actuate the control brake means when the vehicle speed is greater than a setting speed when the operation request of the left and right parking lock means is generated, and to actuate the left and right parking lock means when the vehicle speed becomes equal to or smaller than the setting vehicle speed.

3. The parking lock device for the vehicle as claimed in claim 1 or 2, wherein the parking lock device further comprises a parking sensing means configured to independently sense fixations of the first left and right wheels by the left and right parking lock means; the control brake means includes left and right brake means configured to independently brake the second left and right wheels; the parking control means is configured to decrease the braking force of the left and right brake means acted to the one of the second left and right wheels which is the same side as the one of the first left and right wheels that is fixed by the left and right parking lock means.

4. The parking lock device for the vehicle as claimed in one of claims 1 to 3, wherein the parking lock device further comprises a slip sensing means configured to sense a slip state of the second left and right wheels; and the parking control means is configured to control the braking force of the control brake means which is acted to the second left and right wheels in accordance with the slip state of the second left and right wheels.

5. The parking lock device for the vehicle as claimed in one of claims 1 to 4, wherein the parking lock device further includes a steering angle sensing means configured to sense a steering angle of a steering; and the control brake means includes a left and right brake means configured to independently brake the second left and right wheels; and the parking control means is configured to independently control the braking forces of the left and right braking means which is acted to the second left and right wheels in accordance with the steering angle of the steering.

6. The parking lock device for the vehicle as claimed in one of claims 1 to 5, wherein the parking lock device further comprises a vehicle stop sensing means configured to sense a stop of the vehicle, a parking lock wheel rotation sensing means configured to independently sense the rotations of the first left and right wheels, and a mechanical brake means configured to brake the first left and right wheels by driving by a mechanical structure; and the parking control means is configured to output a warning to prompt an operation of the mechanical brake means, or to actuate the mechanical brake means when at least one of the first left and right wheels is rotated before the stop of the vehicle is sensed.

7. The parking lock device for the vehicle as claimed in one of claims 1 to 5, wherein the parking lock device further comprises a vehicle stop sensing means configured to sense a stop of the vehicle, a parking lock wheel rotation sensing means configured to independently sense rotations of the first left and right wheels; a parking lock wheel control brake means configured to brake the first left and right wheels; and the parking control means is configured to output a warning to prompt an operation of the parking lock wheel control brake means, or to actuate the parking lock wheel control brake means when at least one of the first left and right wheels is rotated before the stop of the vehicle is sensed.

8. The parking lock device for the vehicle as claimed in one of claims 1 to 7, wherein the parking lock device further comprises a parking lock release request means configured to request a release of the left and right parking lock means, and a mechanical brake means configured to brake the first left and right wheels by driving by a mechanical structure; and the parking control means configured to release the left and right parking lock means after the mechanical brake means is actuated when the release request of the left and right parking lock means is generated.

9. The parking lock device for the vehicle as claimed in claim 8, wherein the parking control means is configured to release the braking by the mechanical brake means when there is a vehicle operation based on a vehicle operation command.

10. The parking lock device for the vehicle as claimed in one of claims 1 to 7, wherein the parking lock device further comprises a parking lock release request means configured to request a release of the left and right parking lock means, a parking lock wheel control brake means configured to brake the first left and right wheels; and the parking control means is configured to release the left and right parking lock means after the parking lock wheel control brake means is actuated when the request of the release of the left and right parking lock means is generated.

11. The parking lock device for the vehicle as claimed in claim 10, wherein the parking control means is configured to release the braking by the parking lock wheel control brake means when there is the vehicle operation based on the vehicle operation command.

12. The parking lock device for the vehicle as claimed in one of claims 1 to 7, wherein the parking lock device further comprises a parking lock release request means configured to request a release of the left and right parking lock means, and a motor configured to drive the first left and right wheels; and the parking control means is configured to release the left and right parking lock means after the vehicle stop state is held by actuating the motor when the release request of the left and right parking lock means is generated.

13. The parking lock device for the vehicle as claimed in claim 12,wherein the parking control means is configured to release the holding of the vehicle stop state by the actuation of the motor when there is the vehicle operation based on the vehicle operation command.
